# EUROPEAN PATENT SPECIFICATION

(11) **EP 4 256 437 B1**
(45) Date of publication and mention of the grant of the patent: **11.11.2026**
(21) Application number: 22713785.8
(22) Date of filing: 23.02.2022
(51) Int. Cl.: G06F 13/38, H04L 41/022, H04L 41/0816

(54) **APL FIELD SWITCH WITH AUTOMATIC PROTOCOL DETECTION**
APL-FELDSCHALTER MIT AUTOMATISCHER PROTOKOLLERKENNUNG
COMMUTATEUR DE CHAMP APL À DÉTECTION DE PROTOCOLE AUTOMATIQUE

(30) Priority: 23.02.2021 US 202163152435 P; 23.02.2021 US 202163152438 P
(43) Date of publication of application: 11.10.2023
(60) Divisional application: 25172694.9 / 4 568 210
(73) Proprietor: Phoenix Contact Development and Manufacturing, Inc., Middletown, PA 17057 (US)
(72) Inventor: SWARR, Lonnel J., Manheim, PA 17545 (US); KATZ, David N., Hummelstown, PA 17036 (US); MATHEWS, Davis, Lewisberry, PA 17339 (US); GILLESPIE, Brian John, Mount Joy, PA 17552 (US); HELFRICK, Brenton E., Harrisburg, PA 17111-0100 (US); FRYE, Scott Michael, Palmyra, PA 17078 (US); Norris, Jason Alan, Stow Ohio 44224 (US)
(74) Representative: Samson & Partner Patentanwälte mbB
(86) International application number: PCT/US2022/017536
(87) International publication number: WO 2022/182771

(56) References cited:
- US-A1- 2015 127 876
- US-A1- 2019 102 335
- US-A1- 2020 076 204
- US-B2- 10 481 627
- US-B2- 9 024 486

## Description

### Related Applications

This application claims priority to and the benefit of the filing dates of US Patent Application 63/152,435 filed February 23, 2021 at Attorney Docket No. 14-1383-P and entitled "APL Field Switch with Automatic Protocol Detection" and US Patent Application 63/152,438 filed February 23, 2021 at Attorney Docket No. 14-1384-P and entitled "APL Field Switch with Integrated Protocol Detection", which priority applications were pending on the filing date of this application.

### Field of the Disclosure

The disclosure relates generally to field switches for use in process control networks, and in particular, APL field switches.

### Background of the Disclosure

The Ethernet Advanced Physical Layer (APL) specification is based on an industry standard (IEEE 802.3cg) for the physical layer for an Ethernet based, two-wire process control network. An APL network enables data rates of up to 10 Megabits per second (Mbps) full duplex to and from APL-compatible field devices for long transmission distances. APL field devices include sensors, actuators, and the like required for operation of a sophisticated process control network.

APL field devices are typically connected to APL field switches. An APL field switch typically has between 8 to 24 channels that connect to APL field devices. The APL field switch channels transfer power to the connected APL field devices and transfer data between the APL field devices and the process control network. An example of a commercially available 24-channel APL field switch is the FIELDCONNEX^{®} ARS11-B2-IC24-1 APL field switch sold by Pepperl+Fuchs GmbH, Mannheim, Germany
Because of the advantages offered by APL networks, many industries are installing APL networks (that include APL field switches) when building new process control infrastructure. But APL field devices are still not readily available. Those building new infrastructure must rely at least partially on legacy, non-APL field devices. An upgrade pathway from legacy field devices to APL field devices is desirable. The pathway should enable legacy field devices to be connected to APL field switches while allowing replacement of those legacy field devices with APL field devices as they become available.

Industries with existing process control networks often must expand their network infrastructure. Investing in additional legacy field devices may not be desirable, but replacing legacy field devices with APL field devices may also not be desirable given the cost to remove field devices in hard-to-reach locations that are still in good operating condition. An expansion that enables use of legacy field devices alongside APL field devices may be the desired solution, a solution that still provides an upgrade pathway from legacy field devices to APL field devices.

There is a need therefore for an APL field switch with channels that enable connection of both APL field devices and legacy non-APL field devices. But legacy non-APL field devices do not use the same field device protocols (data and power specifications) as do APL field devices. It is necessary that the APL field switch do protocol conversion between APL and non-APL protocols if legacy field devices can operate in an APL process control network while connected to the network through an APL field switch.

One solution is an APL field switch containing the onboard hardware and software that supports any legacy non-APL protocol on any channel. But the list of legacy protocols is long. This solution is cost-prohibitive and customers must pay for hardware that they may not ever use.

Another solution is an APL field switch containing onboard hardware to software that supports a small subset of non-APL protocols. But this greatly limits the number of legacy field devices that can be attached to the APL field switch.

Yet another solution is an APL field switch containing onboard hardware and software on just a few fixed channels. But this makes it difficult to order the correct number of APL field devices or to order APL field devices with the correct number of fixed channels. The opportunity for installation mistakes attaching a that a field device - legacy or APL to the wrong channel also increase.

A further alternative solution is an APL field switch that supports only one non-APL protocol. For example, the FIELDCONNEX^{®} ARS11-B2-IC24-1 APL field switch can be used with PROFIBUS PA field devices. But this does not provide the flexibility needed for many new and existing process control infrastructures.

Protocol converters that can convert communications between different network protocols can also be useful in enabling a device capable of communicating using a first protocol to be connected to a network that communicates using a second, different protocol.

Intel Corporation U.S. Patent Application Publication 2019/0102335 A1 (the '335 published application hereinbelow) discloses a USB-C port that can handle not only USB communications, but other communication protocols such as PCIe, DisplayPort (DP), Thunderbolt (TBT), and the like. The USB-C port includes a set of controllers that function as protocol converters that communicate in the different protocols handled by the USB-C port. When the USB-C port receives a signal that it has connected to a mating port, a port controller attempts communicating using the USB controller, and if unsuccessful, then attempts communicating with each of the other protocol controllers until a compatible protocol communication is established. While the USB-C port utilizes a set of protocol convertors for a single port, the '335 published application does not teach or disclose using or having a set of one or more protocol converters selectively connectable and used in common with multiple ports for determining the protocol of the signals received from the multiple ports.

Fisher-Rosemount US Patent Application Publication 2015/127876 A1 (the '876 published application hereinbelow) discloses a termination module 124a that is operatively connected between a field device and an I/O card and can convert between a field device protocol and an I/O card protocol to enable two-way communication between the I/O card and field device.

Embodiments of the termination module 124a can convert among multiple field device protocols. When first connected to a field device the termination module can interrogate the field device by running through each protocol and issuing a test signal or request to elicit a response from the field device. Once a response is received and the protocol is
established, only the one protocol is used and the other protocols are not used.

The '876 published application utilizes hardware and software that enables communication utilizing a set of protocol converters. Only one protocol converter is used during normal communications with the field device.

The '876 published application does not teach or suggest using a set of protocol converters selectively connectable with a plurality of channels for establishing a communications protocol of a field device attached to a channel of the plurality of channels as recited in claim **1.**

Fisher-Rosemount US Patent 10,481,627 (the '627 patent hereinbelow) discloses a hand-held field maintenance tool that has respective sets of terminals for connecting to a respective communications bus that communicates using a predefined protocol. For example, one set of terminals is configured to connect to a Foundation Fieldbus communications bus and another set of terminals is configured to connect to a HART communications bus.

The tool may include a routine for identifying the communication protocol of the connected communications bus.

The tool may also recognize the presence of compatible devices on the communications bus and may also transmit power through the communications bus to devices on the communications bus.

The '627 patent does not teach or suggest using a set of protocol converters selectively connectable with a channel of a plurality of channels of a field device for determining a communications protocol of a field device attached to any one of the channels of the field device. as recited in claim **1.**

Rockwell Automation Technologies U.S. Patent 9,024,486 (the '486 patent hereinbelow) discloses an automation controller that communicates with field devices through respective I/O devices formed generically as an adaptable device. The I/O devices can be individually configured to be input modules, output modules, input/output modules, analog devices, or digital devices. An I/O devices can be coupled to an I/O adapter that enables conversion between the protocol converters of the I/O devices and the automation controller. However, the '486 patent does not teach or suggest automatic detection of the protocol of the I/O devices.

Thus, there is a need for an APL field switch that enables legacy non-APL field devices having many different legacy field device protocols to be reliably attached to any channel of the APL field switch in a cost-efficient manner.

### Summary of the Disclosure

Disclosed is an APL field switch that enables legacy non-APL field devices having many different legacy field device protocols to be reliably attached to any channel of the APL field switch in a cost-efficient manner as set out in the appended set of claims.

The solution is to place protocol conversion in a pluggable protocol adapter that is inserted into an APL field device channel to convert between the APL protocol and the attached legacy field device protocol. Different protocol adapters can be installed in any of the channels of the APL field device.

A wide range of protocol adapters can be made available supporting a wide range of legacy field device protocols, providing the flexibility needed for many new and existing process control infrastructures.

By purchasing protocol adapters based on the customer's needs, a customer only incurs costs for those legacy field devices that are connected to the APL field switch and they pay only for the protocols they need. Some protocols require expensive support circuitry; providing such circuitry for each channel makes purchase of the APL field switch expensive whether the customer will use that circuitry or not. With protocol adapters, customers do not purchase expensive circuitry if it is not needed.

Protocol adapters enable customers to easily make changes to the network. Protocol adapters can be swapped when changing from one legacy field device to another or whenever infrastructure requirements change.

APL field switches in accordance with this disclosure include a protocol adapter connector in each channel. Plugging a protocol adapter into a protocol adapter connector places the protocol adapter in series in the channel. The protocol adapter is capable of transferring power through the protocol adapter to power an attached field device and to translate data formats between APL and legacy data formats for network communications. The protocol adapter can include expensive legacy circuitry for high-speed data communications with the attached field device in the legacy data format.

Installers can land legacy field devices on any available channel of the APL field switch and install a compatible protocol adapter in that channel. Channels connected to APL field devices do not require a protocol adapter; the channel is itself compatible with the APL protocol. If all the connected field devices are APL field devices, there is no need to purchase protocol adapters. The APL field device then provides insurance in being capable of connecting to legacy field devices if ever needed but the cost of acquiring that capability by using protocol adapters will not be incurred if the need never arises.

It can be difficult to identify the protocol used by a legacy field device, and therefore difficult to know which protocol adapter to use for a given legacy field device.

Also disclosed herein are protocol detection circuits that enable automatic detection of the protocol used by a field device (whether an APL field device or a legacy field device). Each protocol detection circuit is dedicated to detecting a respective field device protocol or compatible family of protocols.

A controller sequentially connects each protocol detection circuit to the attached field device and communicates with the field device until the protocol is detected or the controller fails to detect the protocol after trying each protection detection circuit. Because field device communications during protocol detection do not have to be high-speed communications, protocol detection circuits can eliminate expensive circuitry needed for high-speed data communications.

Because the protocol of the attached field device is not known, it is important to limit initial power transmission to a safe current or amperage. A safe current is a low enough current that will not cause a field device terminator resistor to dissipate power above its maximum rating. Each channel includes a selectably-adjustable current-limiting device that is connected to and controlled by the controller. The controller initially sets the current-limiting device to a safe current state before initiating protocol detection. If the detected protocol allows for higher power transmission, the controller sets the current-limiting device to a corresponding current state.

Once protocol detection is completed, the name of the detected protocol or the failure to detect a protocol is displayed to a user. The user selects the protocol adapter to use based on the detected protocol.

In embodiments of the disclosed APL field switch, the APL field switch includes the protocol detection circuits, the controller, and selectable current-limiting devices in each channel. When a field device is first attached to a channel, the controller sets the channel's current-limiting device to a safe current stat3e and initiates protocol detection. The controller connects to the channel itself when detecting whether the field device is an APL field device. The controller sequentially connects the protocol detection circuits to the channel to connect the protocol detection circuits to the attached field device.

When a channel is attached to an APL field device, the controller can be configured to enable dynamic power allocation of the channel to a user-selectable APL Power Class.

A single set of protocol detection circuits can be used with any channel to which a field device is attached. It is not necessary to provide multiple copies of the set, one for each channel. APL field switch hardware costs are reduced while still allowing legacy field devices to be attached to any channel of the APL field switch.

In yet other embodiments of the disclosed APL field switch, the APL field switch does not include the protocol detection circuits. A portable handheld protocol detection tool can be used instead to automatically detect the protocol of a field device attached to the protocol detection tool. The protocol detection tool includes an APL channel, the protocol detection circuits, and the controller. The field device is attached to the APL channel and the controller initiates protocol detection and conducts protocol detection as previously described above. The tool can be battery powered or powered through an AC adapter.

Other objects and features of the disclosure will become apparent as the description proceeds, especially when taken in conjunction with the accompanying drawing sheets illustrating one or more illustrative embodiments.

### Brief Description of the Drawings

Figure 1 illustrates a process control network including an APL field switch in accordance with this disclosure.
Figure 2 illustrates an APL field switch in accordance with this disclosure.
Figure 3 is an enlarged view of a channel of the APL field switch shown in Figure 2, the protocol adapter connector of the channel not connected to a matching connector.
Figure 4 is similar to Figure 3 but illustrates a pass-through connector attached to the protocol adapter connector.
Figure 5 is a perspective view of the outside of the APL field switch of Figure 2 illustrating removable covers disposed over the protocol adapter, each cover forming part of a pass-through connector.
Figure 6 is a schematic view of the automatic protocol detection circuitry of the APL field switch shown in Figure 2 and the connections of the protocol detection and power controller to each channel of the APL field switch.
Figure 7 is a schematic view of a constant current limiting circuit.
Figure 8 is a schematic view of a foldback current limiting circuit.
Figure 9 is a schematic view of a parallel resettable fuse arrangement.
Figure 14 illustrates the connections of the protocol detection and power controller shown in Figure 6 to components of each channel and each protocol detection circuit of the APL field switch.

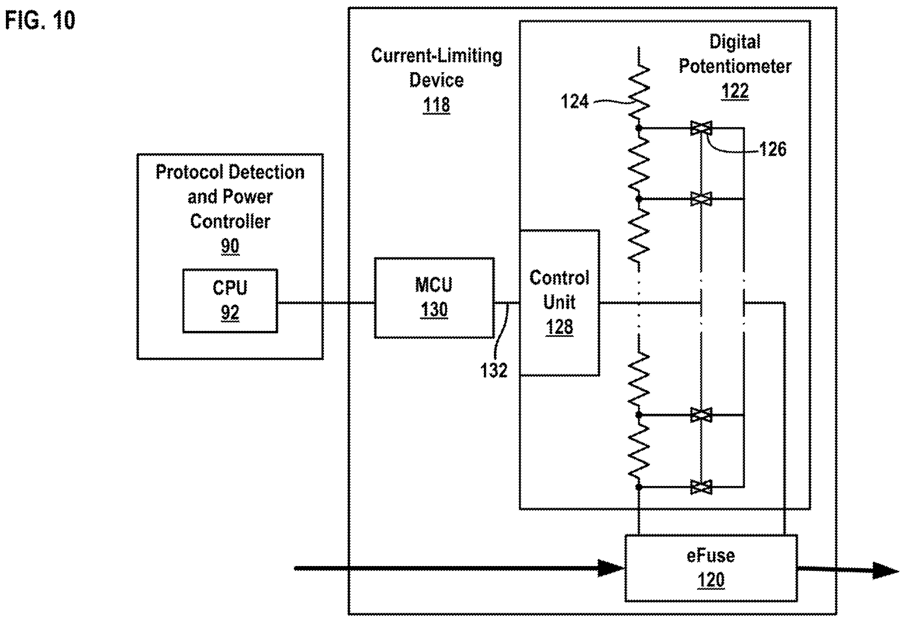

Figure 10 is schematic view of an embodiment of a current-limiting device attached to the controller, the current-limiting device including a digital fuse (eFuse) attached to a digital potentiometer.

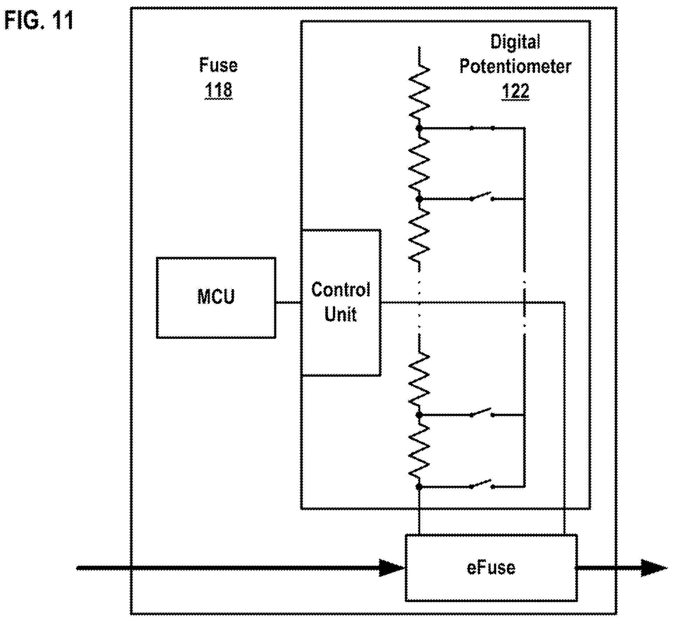

Figure 11 is a view of the current-limiting device shown in Figure 10 in a first, lower power state.

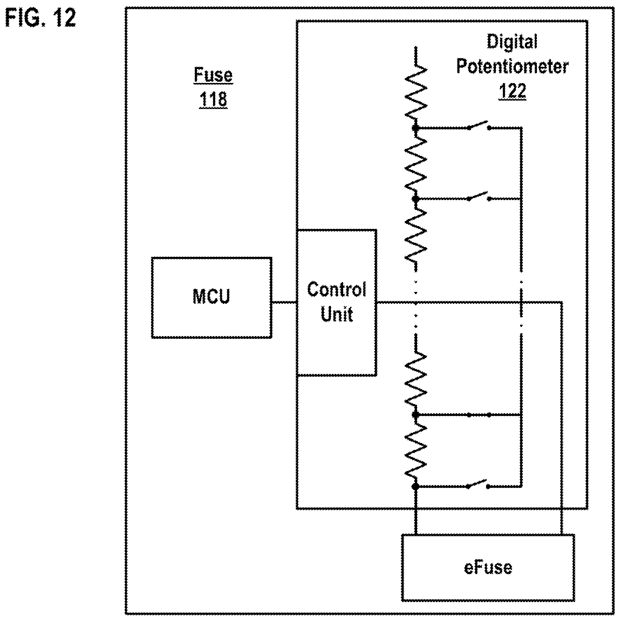

Figure 12 is similar to Figure 11 but the current-limiting device in a second, lower power state.

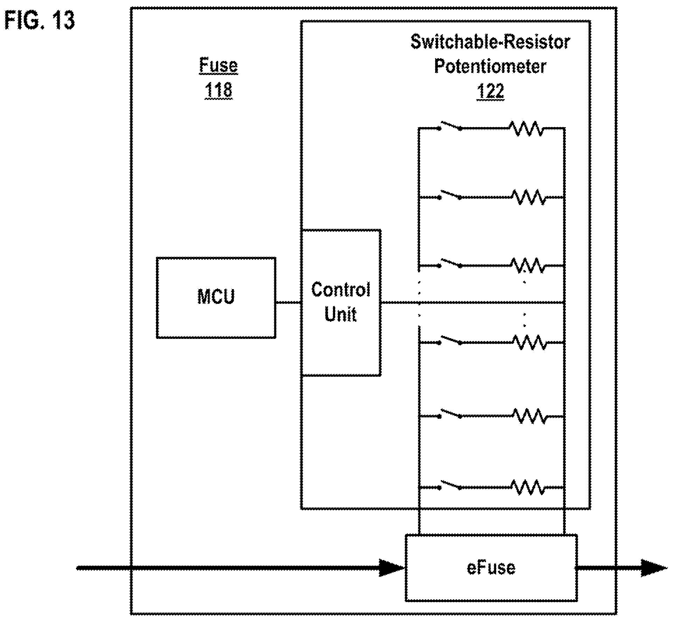

Figure 13 is a schematic view of a second embodiment current-limiting device.

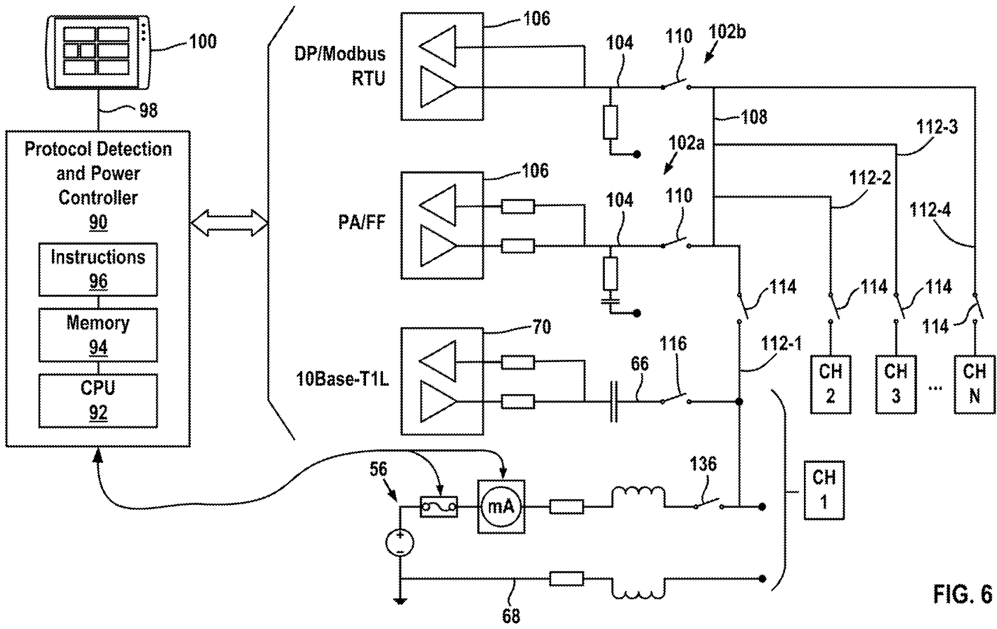

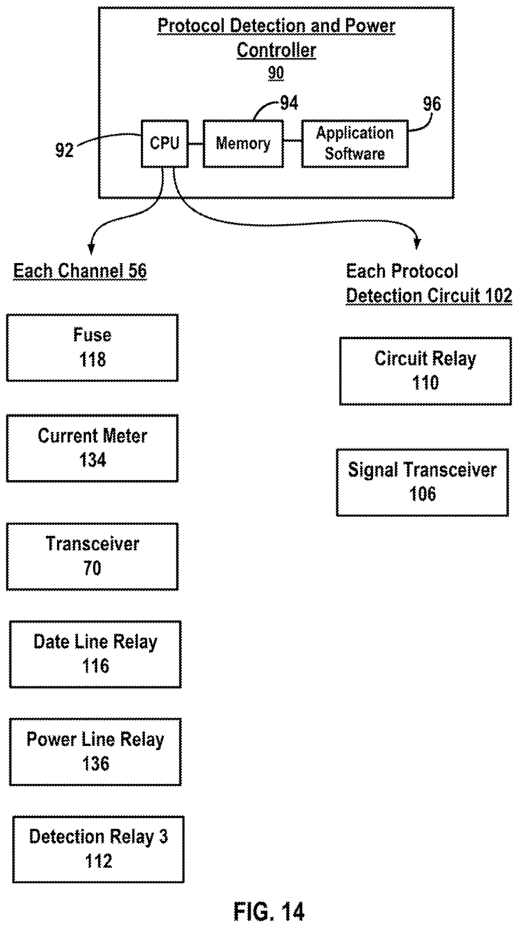

Figure 14 illustrates the connections of the protocol detection and power controller shown in Figure 6 to components of each channel and each protocol detection circuit of the APL field switch.

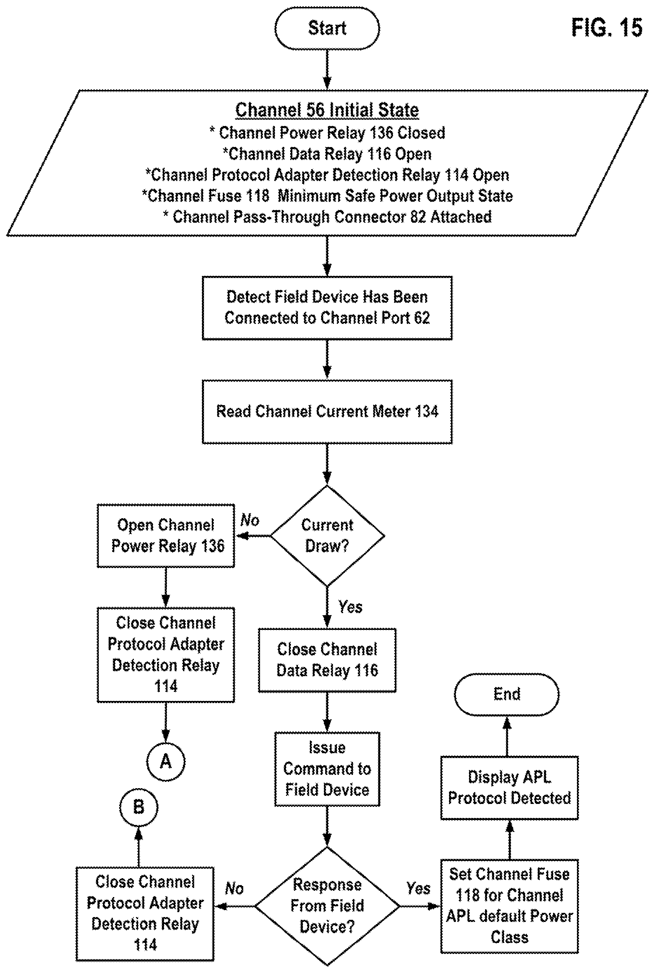

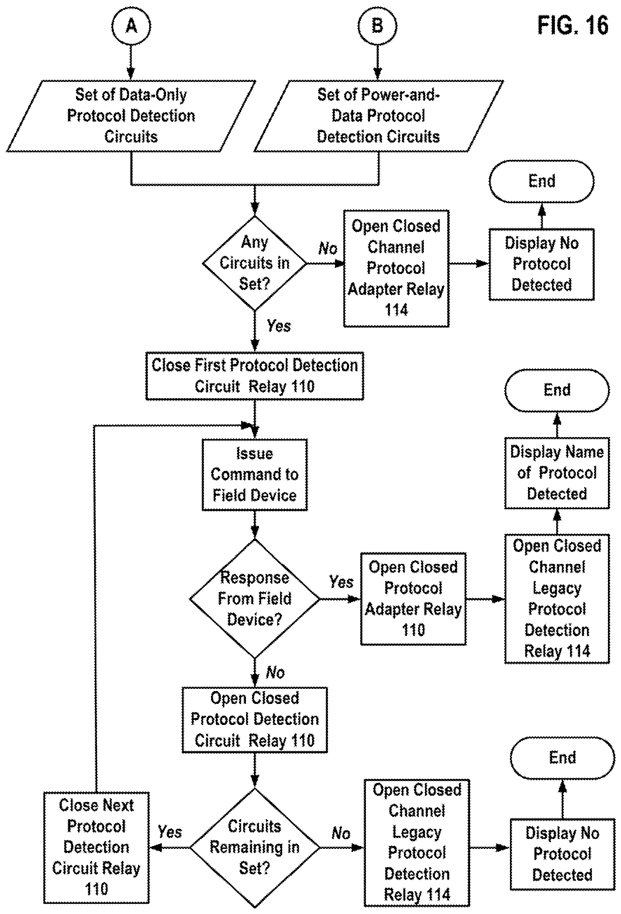

Figures 15 and 16 illustrate a flow chart of a method for automatic protocol detection using the automatic protocol detection circuitry shown in Figure 6.

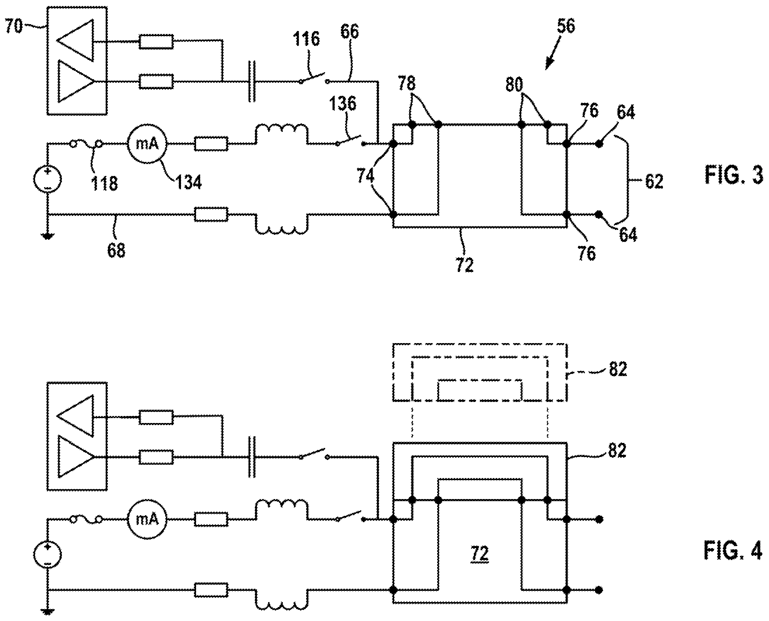

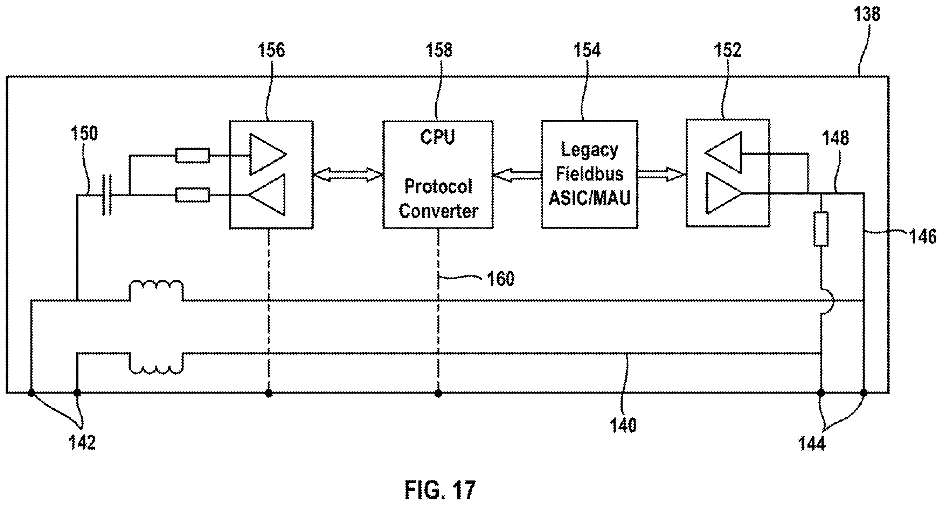

Figure 17 is a schematic view of a first embodiment protocol adapter configured for connection to the protocol adapter connector shown in Figure 3.

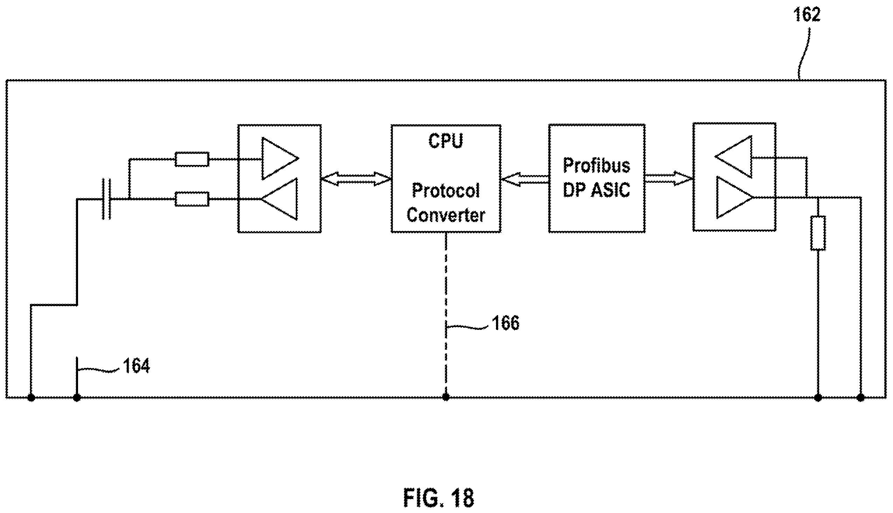

Figure 18 is a schematic view of a second embodiment protocol adapter configured for connection to the protocol adapter connector shown in Figure 3.

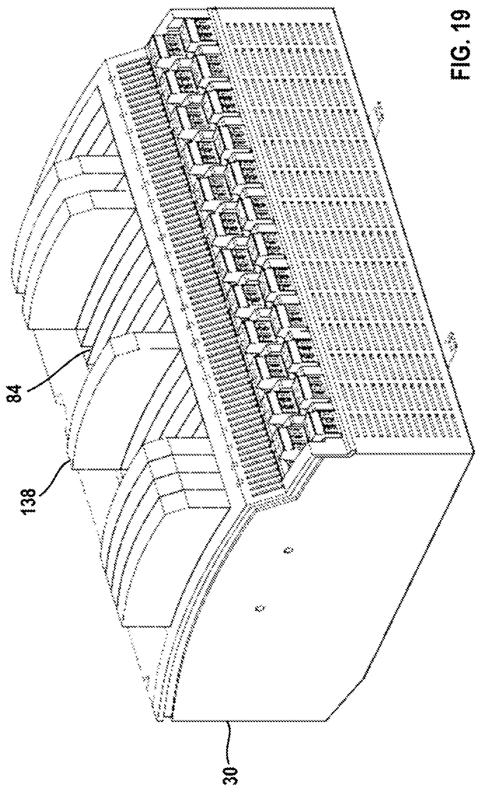

Figure 19 illustrates the APL field switch with the covers removed and protocol adapters attached in some of the channels of the APL field switch.

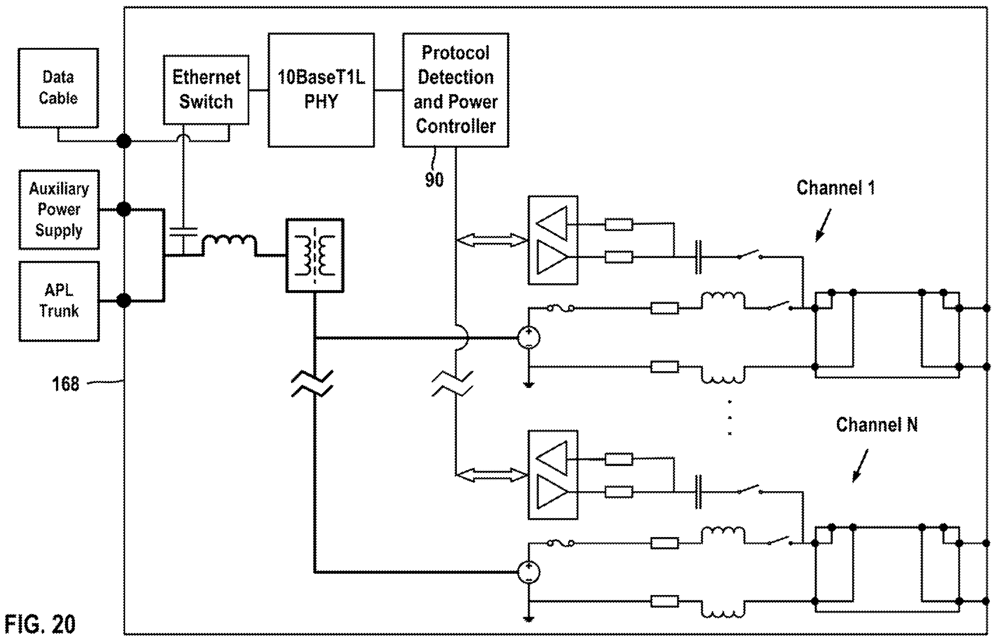

Figure 20 illustrates is a handheld protocol detection unit attached to a field device.

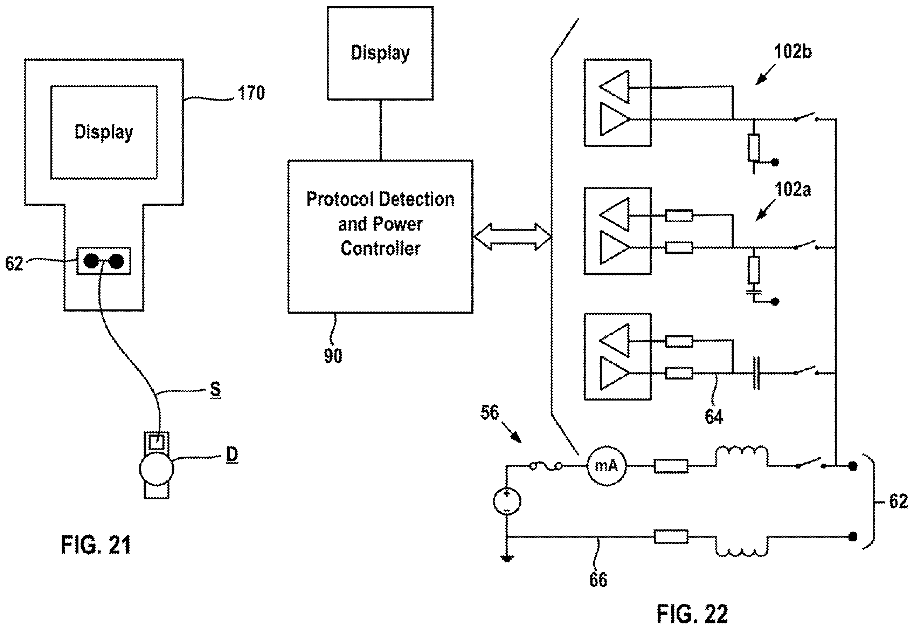

Figure 21 is a schematic view of the protocol detection circuitry contained in the protocol detection unit shown in Figure 20.

### Detailed Description

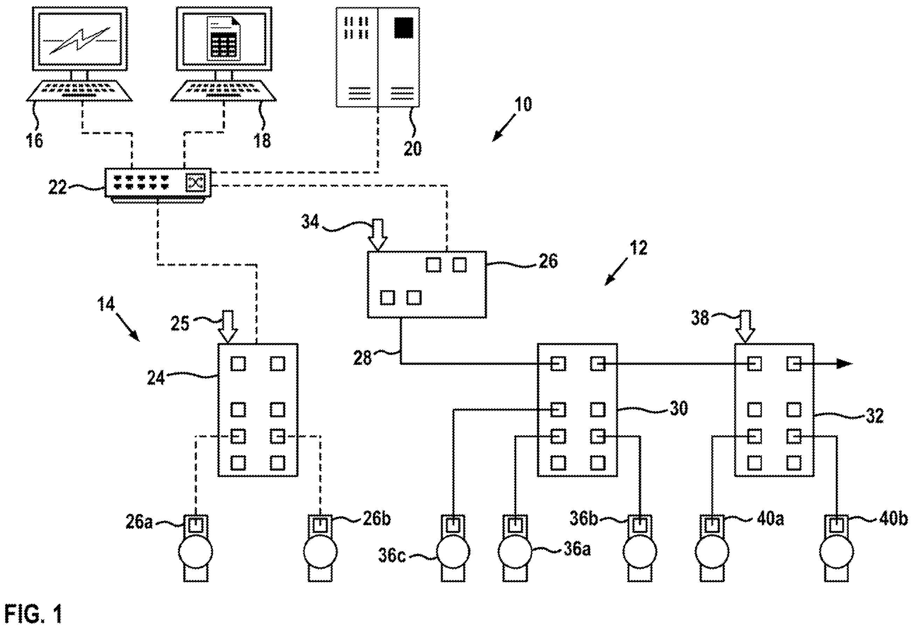

Figure 1 illustrates a process control network 10 made up of a 10 Mbps Ethernet-APL process control network 12 and a 100 Mbps Industrial Ethernet process control network 14.

The APL-Ethernet process control network 12 conforms to the Ethernet Advanced Physical Layer (APL) specification. The APL-Ethernet network 12 uses two-wire trunk and two-wire spur cabling for simultaneous data transmission and power transmission over the two wires. The trunk and spurs of the APL-Ethernet process control network 12 are shown in solid lines in Figure 1.

The illustrated Industrial Ethernet process control network 14 is an EtherNet/IP (Ethernet Industrial Protocol network). The Industrial Ethernet network 14 uses standard Ethernet CAT 5 or better Ethernet cable (referred to herein as "standard Ethernet cable") and associated hardware that is also commonly used in business Ethernet LAN networks. Standard Ethernet cables are shown in broken lines in Figure 1.

The process control network 10 includes a backend having an engineering station 16, an operations station 18, a process controller 20, and a backend non-APL Ethernet switch 22. The backend stations, process controller, and Ethernet switch are connected by standard CAT 5 or better Ethernet cables for high speed Ethernet communications (100 Mbps or greater).

The Industrial Ethernet network 14 includes a non-APL Ethernet switch 24 connected to the backend Ethernet switch 22 by a standard CAT 5 or better Ethernet cable. The Industrial Ethernet switch 24 is powered by an auxiliary power supply represented by the arrow 25. The Industrial Ethernet switch 24 is connected to a non-APL field device 26a and a non-APL field device 26b by standard CAT 5 or better Ethernet cables. The field device 26a and field device 26b are powered by auxiliary power supplies and not through the network. The back end can communicate with the field devices 26a, 26b through the backend Ethernet switch 22 and the Industrial Ethernet switch 24.

The APL-Ethernet network 12 includes an APL power switch 26 connected to an APL trunk 28 that extends from the APL power switch to a downstream APL field switch 30, and then to a further downstream APL field switch 32. The APL power switch 26 receives power from an auxiliary DC power source represented by the arrow 34. The APL power switch 26 injects power into the APL trunk for the simultaneous transmission of power and data through the trunk.

The APL power switch 26 is connected for data transmission to the backend Ethernet switch 22 through a standard Ethernet CAT 5 or better cable. The APL power switch 26 converts between the 100 Mbps Ethernet transmitted through the standard Ethernet cable to the 10 Mbps Ethernet transmitted through APL-Ethernet two-wire cable to provide data communications between the APL-Ethernet network 12 and the back end Ethernet switch 22.

The APL field switch 30 is shown connected to the network trunk 28 and can transmit power received from the network trunk to field devices attached to the APL field switch. The APL field switch 30 is connected to a field device 36a, a field device 36b, and a field device 36c by respective two-wire APL-compatible spurs extending from ports of the APL field switch. The APL field switch 32 transmits data to and from the field devices 36 and can deliver power to the field devices 36 received through the network trunk 28.

The APL field switch 32 is shown connected to an auxiliary power source represented by the arrow 38. The APL field switch 32 is not powered from the trunk 28 but receives and transmits data through the APL trunk 28. The APL field switch 32 as shown in Figure 1 is connected to a field device 40a and a field device 40b by respective two-wire APL-compatible spurs extending from ports of the APL field switch. The APL field switch 32 transmits data to and from the field devices 40 and can deliver power to the field devices 40 received through the auxiliary power source 38.

The field devices 26, 36, 40 are sensors, actuators, and the like compatible with the field switches to which they are connected. The field devices output sensor data, operating status, command confirmations, diagnostics, and other outgoing network communications required for operation of the process control network 10 and/or are configured to receive commands, data requests, and other incoming network communications required for operation of the process control network 10.

As the two APL field switches shown in Figure 1 are identical, only the APL field switch 30 will be discussed in detail.

The APL field switch 30 is connected to an APL field device 36a and to legacy non-APL field devices 36b and 36c. The APL field switch 30 is configured to operatively connect to APL field devices by attaching an APL spur from the APL field switch to the field device. The APL field switch 30 has internal protocol detection circuitry (shown and described in more detail below) that includes a controller that detects whether or not an APL field device has been attached to the field switch.

If an APL field device is detected, no further user-configuration is required. The port transfers data to and from the APL field device and delivers power through the port to the APL field device in accordance with the APL specification.

If the protocol detection controller detects that the attached field device is not an APL field device, the controller sequentially connects the field device to a number of respective protocol detection circuits that can each identify a respective non-APL network protocol if used by the non-APL field device. The protocol detection controller informs the user of the detected non-APL protocol, or of the failure to detect a protocol.

If a non-APL protocol is detected, the user utilizes a protocol adapter compatible with the detected protocol. The protocol adapter is placed in series with the port. The protocol adapter converts data between the APL data protocol and the field device data protocol to enable data transmission between the field device and the network trunk or other data terminals of the APL field switch.

The protocol adapter can also transmit power received into the APL field switch 30 through the protocol adapter and to the port for power transmission to the field device.

Not all field device protocols, however, are "data and power protocols" that require both data transmission and power transmission. Some field device protocols are "data only" protocols without power transmission to the field device. Protocol adapters for "data only" protocols do not allow electrical power transfer through the protocol adapter while allowing data transfer through the protocol adapter.

The protocol detection circuitry also incorporates power circuitry that enables the controller to selectively adjust the maximum power that can be transmitted through the port while detecting the field device protocol. The physical layer specifications of different network protocols specify different power requirements (including a power requirement of zero), and may specify the field device have a termination resistor for proper network operation. The controller sets an initial current to the field device at the start of protocol detection that prevents the resistor from dissipating power above its maximum power rating.

The field device 36b is a PROFIBUS PA field device. The PROFIBUS PA protocol is a power-and-data protocol. Other power-and-data protocols include, but are not limited to, the APL protocol and the Foundation Fieldbus protocol. The field device 36c is a MODBUS RTU field device 36b. The MODBUS RTU protocol is a data-only protocol. Another data-only protocol is, but is not limited to, DP (Profibus DP). The illustrated APL field switch 30 includes PROFIBUS PA and MODBUS RTU protocol detection circuits. A removable PROFIBUS PA protocol adapter and a removable MODBUS RTU protocol adapter are installed in the APL field switch 30 and are connected to the PROFUS PA field device 36b and to the MODBUS RTU field device 36c respectively.

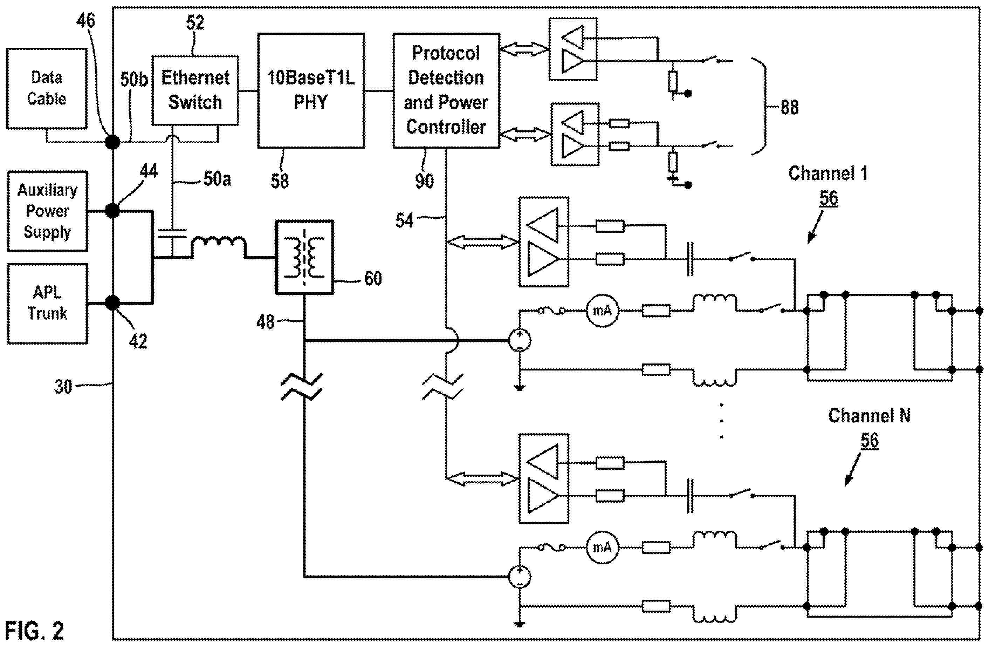

Figure 2 schematically illustrates components of the APL field switch 30. The APL field switch has trunk terminals 42 for connecting the field switch to an APL trunk 28 and external power supply terminals 44 for connecting the field switch to an auxiliary power supply (like the auxiliary power supply 38). The illustrated APL field switch 30 also includes one or more dedicated data ports 46 that transmit data, and not power, into and out of the APL field switch 30. A dedicated data port 46 can be realized as an Ethernet RJ45 connector, an SFP optical connector, or the like for connection to a compatible external optical or electrical data cable..

When the APL field switch is powered by the APL trunk connected to the trunk terminals 42, the trunk terminals 42 function both as power terminals that receive power into the APL field switch and data terminals that transmit data between the APL trunk and the APL field switch. When the APL field switch is powered by an external power source connected to the external power supply terminals 37, the external power supply terminals 44 function as power terminals that receive power into the APL field switch, and the trunk terminals 42 function as data terminals that transmit data between the APL trunk and the APL field switch. Each dedicated data terminal 46 functions only as a data terminal that transmits data into and out of the APL field switch 30.

Power received through the power terminals 42, 44 are received into the APL field switch 30 through a power line 48 connected to the terminals 42, 44. The power line 48 also transmits data into the APL field switch through the trunk terminals 42 and transmits data out of the APL field switch through the trunk terminals 42. A data line 50a extends between the power line 50 and one end of an Ethernet switch 52. The data line 50a extracts data from the power line 48 received through the trunk terminals 42 and transits the data to the Ethernet switch 52, and injects data received from the Ethernet switch 52 into the power line 48 for transmittal out through the trunk terminals 42. A data line 50b extends between each data terminal 46 and the one end of the Ethernet switch 52 for data transmission into and out of data terminals 46. The Ethernet switch 52 in turn has data lines represented as the data line 54 extending from the other end of the Ethernet switch to transmit data between the Ethernet switch and connected field devices.

The power line 48 and the data line 54 extend to a number N of like channels 56 that extend in parallel from the power line 50 and the data line 54 to respective ports of the APL field switch 30. The channels 56 may be galvanically isolated from the power line 48 and from each other.

Disposed in the data line 54 between the channels 56 and the combined power/data line 56 is a 10BaseT1L Ethernet physical layer transceiver 58. The transceiver 58 enables communication of Ethernet-formatted data frames between the channels 56 and the combined power/data line 50. Disposed in the power line 48 ahead of the channels 56 is an isolated switching power supply 60 that electrically isolates the channels 56 from the power terminals.

Figure 2 illustrates two of the N channels 56, and Figure 3 is an enlarged view of a channel 56. The channel 56 transmits data and power between the power line 48 and the data line 54 and a port 62. Each channel's port 62 has port terminals 64 configured as a two-wire Ethernet-compatible port connector. The port terminals 64 may in alternative embodiments be configured as a screw or clamping terminal, an M12 connector, or other connector compatible with the APL specification. Different styles or types of port terminals 64 may be provided by the APL field switch manufacturer, and a port 62 may include multiple types of port terminals 64 provided in parallel for greater connection flexibility in connecting a field device to an APL field switch port.

The channel 56 includes a channel data line 66 being one of the data lines 54 and a channel power line 68. The end of the channel data line 66 away from the Ethernet switch 52 is connected to and extends from the channel power line 68. The channel data line 66 extracts data from the channel power line 68 transmitted through the port 62 and injects data into the channel power line 68 transmitted from the Ethernet switch 52. The channel data line 66 includes an APL-compatible transceiver 70 that receives and transmits Ethernet data frames from and to the Ethernet switch 52.

The channel power line 68 is formed as a two-wire line connected to and extending from the power line 50 to the port terminals 64. The channel data line 66 connects to the channel power line 68 before the channel power line connects to the port terminals 64. The port terminals 64 then can transmit power out of the port 62 and can receive and transmit data through the port 62.

The channel data line 66 and the channel power line 68 include conventional circuit components that enable separation and merger of power and data, intrinsic safety, overvoltage protection, isolation, and the like. Transmission of power and data frames through a channel 56 is conventional except that the channel 56 includes features that enable automatic protocol detection of a field device, operative connection of a non-APL field device to the channel port 62 using a protocol adapter, and dynamic setting of the maximum power that can be transmitted through the channel 56 as set out in further detail below.

As best seen in Figure 3, a channel 56 includes a protocol adapter connector 72 formed as an electrical connector disposed in series in the channel power line 68 between the channel data line 66 and the port terminals 62. The protocol adapter connector is used to insert a protocol adapter (described din more detail later below) into the channel power line 68. The protocol adapter connector 72 has terminals 74 and terminals 76 that connect the connector 72 to the channel power line. The protocol adapter connector 72 has connector terminals 78 and terminals 80 connected to the power terminals 74, 76 respectively that are configured to cooperate with corresponding terminals of a protocol adapter to electrically connect the protocol adapter in series in the channel power line 68.

As shown in Figure 3, the protocol adapter connector 72 normally opens the channel power line 68 and prevents transmission of power and data through the channel 56. When an APL field device is connected to the port 62, there is no need to use a protocol adapter. In such a case, a pass-through connector 82 formed as an electrical connector compatible with the protocol adapter connector 72 is attached to the protocol adapter connector 72. See Figure 4. The pass-through connector 82 provides circuit continuity across the protocol adapter connector 72.

When a field device is first attached to a channel port 62, the pass-through connector 82 must be attached to the protocol adapter connector 72 for continuity across the protocol adapter connector 72 when detecting the protocol of the field device.

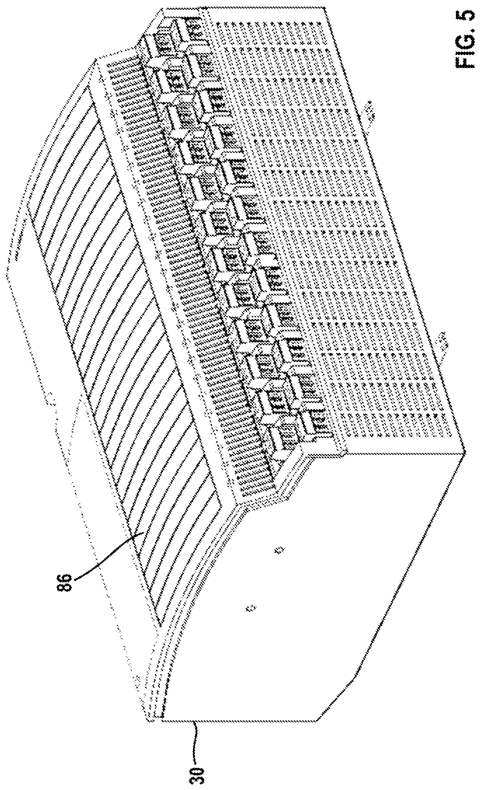

Figure 5 is a view of the outside of the APL field switch 30. Each port 62 has an associated open slot 84 (see Figure 19) that provides access to the protocol adapter connector 72 connected to the port 62. When a protocol adapter is not installed in the slot (when, for example, an APL field device is connected to the port) the slot is closed by a cover 86. Figure 5 illustrates covers 86 closing all the slots. In the illustrated APL field switch embodiment, each cover 86 incorporates two conductors forming part of a respective pass-through connector 82 in series with the protocol adapter connecter terminals 78, 80. When a cover is in place, the cover assures electrical continuity across the protocol adapter connector 72 in the slot closed by the cover.

In other possible cover embodiments, the cover 86 is itself non-conductive but has a pass-through connector 82 connected to the cover. Closing a slot with a cover installs the pass-through connector into the protocol adapter connector 72.

Referring back to Figure 2, the APL field switch 30 includes a protocol detection module 88 containing protocol detection circuitry (shown in more detail in Figure 6) that enables automatic protocol detection of a newly attached field device to a port. The protocol detection circuitry includes a controller 90 that operates the protocol detection circuitry to detect and identify the field device protocol. The controller 90 includes a microprocessor or central processing unit (CPU) 92 that issues commands to the protocol detection circuitry and receives data from the protocol detection circuitry. The CPU 90 has read/write access to storage or memory 94 that holds application software made of executable instructions 96 executable by the CPU 92 to perform controller functions and the data processed by those functions. The memory 94 may be persistent memory such as EEROM memory or other types of non-volatile memory used in embedded systems and may include volatile memory. Battery power may be provided to maintain volatile memory in case of power failure.

The controller 90 may in possible embodiments be realized as a system on a chip (SoC) that may include the microcontroller along with other peripherals needed to perform the controller functions.

The controller 90 is disposed in the data line 54 between the transceiver 58 and the channels 56. The controller 90 can read data from the data line 54 and can transmit data to the data line 54.

The controller 90 is also connected to a communications line 98 used to inform a user of the detected field device protocol (or the failure to detect a field device protocol). A display 100 represents informing the user of the detected field device protocol. A display 100 may be placed on the APL field switch 30 itself or may be separate from the APL field switch. The communication line 98 may, as non-limiting examples, take the form of one or more of: a Bluetooth wireless connection to a smartphone or the like, a wired connection such as a serial USB cable or Ethernet cable that connects to the controller, and/or through APL data terminal(s) 42, 48 via the data line 54. The controller 90 may be configured to be seen as a field device on the process control network to communicate through the process control network.

The protocol detection circuitry 88 further includes a number of respective protocol detection circuits 102 connected to the controller 90. The illustrated APL field switch 30 has two protocol detection circuits, but a manufacturer may also provide APL field switches with only one protocol detection circuit 102 or with more than two protocol detection circuits 102 depending on how many types of legacy non-APL field devices are to supported by the APL field switch.

Each protocol detection circuit 102 is configured for detecting a respective set of one or more compatible non-APL field device protocols. For example, protocol detection 102a is configured to detect the DP/MODBUS RTU field device "data-only" protocols. The protocol detection circuit 102b is configured to detect PROFIBUS PA/FOUNDATION FIELDBUS "power-and-data" protocols. An APL field switch 30 could be provided with a set of one or more data-only protocol detection circuits, a set of one or more power-and-data protocol detection circuits, or a set each of data-only protocol detection circuits and power-and-data protocol detection circuits.

The protocol detection circuits 102 can be selectively connected to each channel 56 for protocol detection of a field device attached to the channel port as explained in more detail below. In this way individual non-APL protocol detection circuits 102 can be used with all the channels 56 without the need for dedicated, per-channel, protocol detection circuits.

A description of a protocol detection circuit 102 is given next. A protocol detection circuit 102 includes a data line 104 and a transceiver 106 connected to the data line 104 conforming to the physical layer of the protocol(s) associated with the protocol detection circuit. When attempting to determine whether a field device utilizes the device protocol associated with the protocol detection circuit, the controller 90 attempts to communicate with the field device using that protocol. The controller attempts to communicate using the transceiver 106 and, if successful, receives and transmits data to and from the field device through the transceiver. For example, a fieldbus field device will not respond until it receives a command. The controller 90 sends a command to the field device to initiate communication and, if it receives a response from the field device, can determine whether the field device uses that protocol.

In the illustrated embodiment, when a field device is first attached to a channel port 62, the controller 90 first determines whether or not the field device is an APL field device. If the controller determines the field device is not an APL field device, the controller sequentially connects the field device to the protocol detection circuits 102 until the field device protocol is identified or the controller has attempted detection with all of the protocol detection circuits 102. The controller may determine the field device is a data-only field device and iterate only through the data-only protocol circuits. Similarly, the controller may iterate through the power-and-data protocol circuits only if the field device is identified as a power-and-data field device.

As shown in Figure 6, the data lines 104 of the protocol detection circuits 102 are connected in parallel to a common data line 108. Disposed in each data line 104 is a relay 110 connected to and controlled by the controller 90. The relay 110 selectively connects and disconnects the data line 104 from the common signal line 108. When the relay 110 is open, the protocol detection circuit 102 is effectively electrically isolated from the other protocol detection circuits, and is effectively electrically isolated from all the channels 56.

The protocol detection circuit relay 110 is closed only while the protocol detection circuit 102 is actively being used by the controller 90 for protocol detection.

Extending in parallel from the common signal line 108 are respective channel protocol detection data lines 112, each channel protocol detection data line 112 connected to a respective channel 56. Figure 6 illustrates the channel protocol detection data line 112-1 connected to the channel data line 69 of Channel 1. The other channel protocol data lines 112-2 - 112-N connect to the data lines 69 of their respective channels 2 - N in the same way.

Disposed in each channel protocol detection data line 112 is a protocol detection data relay 114 connected to and controlled by the controller 90. The relay 114 selectively connects and disconnects the channel protocol detection data line 112 from the common signal line 108. When a relay 114 is open, the protocol detection data line 112 cannot be connected to any of the protocol adapters 102. In addition, the channel 56 connected to the protocol detection data line 112 is electrically isolated from the other channels 56.

The channel protocol detection data relay 114 connected to a channel 56 is closed only while protocol detection circuits 102 are in use to detect the device protocol of a field device attached to the channel 56. Closing a protocol detection circuit relay 110 connects the channel 56 to the protocol detection circuit containing the relay 110.

As previously mentioned when a field device is attached to a channel port 62, the controller 90 first determines whether or not the field device is an APL field device. The port's channel 56 is used as a protocol detection circuit when the controller 90 is determining whether the attached field device is an APL field device. The controller 90 attempts to communicate with the field device through the channel transceiver 70 via the data line 54. Figure 6 schematically illustrates the Channel 1 transceiver 60 connected for communication with the controller 90; it should be understood that the controller 90 can communicate with each channel transceiver 70.

Each channel 56 includes a relay 116 in the channel data line 66 that is connected to and controlled by the controller 90. When a channel 56 is actively being used to detect the device protocol of a field device attached to the channel 56, the channel data relay 116 is closed for data communication between the controller 90 and the field device. Because the protocol detection circuit relays 110 and the channel protocol detection relays 114 are all open, all data communication between the controller 90 and the attached field device must pass through the channel data line 66 and the channel transceiver 70.

If the controller 90 determines the field device attached to a channel port 62 is an APL field device, the channel data relay 116 remains closed for data communications between the data line 54 and the channel port 62 through the closed relay 116.

When a field device is first connected to a channel port 62 of a channel 56, the field device is connected to the channel power line 68. Because the device protocol has not yet been determined, it is important that the current being delivered to the field device at connection is low enough to prevent a terminator in the field device from dissipating power above its maximum power rating. For example, PROFIBUS DB or MODBUS RTU field devices have lower maximum power ratings than do PA/FOUNDATION FIELDBUS field devices. In other words, at connection the maximum current that can flow through the channel 56 must be limited to the extent necessary that the maximum power output that can be transmitted through the channel 56 does not exceed a minimum safe power output that would not harm the field device attached to the channel port 62.

The protocol detection circuitry 88 includes each channel 56 having an inline, selectable current-limiting device 118 disposed in the channel power line 68. A current-limiting device placed in a circuit activates should the current exceed a predetermined maximum current flow (amperage), thereby interrupting the circuit and stopping current flow or otherwise reducing or maintaining circuit current flow to a safe level. The current-limiting device limits the maximum flow of electrical current through the channel port 62.

Known types of selectably adjustable current-limiting devices that can be adapted for use with the present disclosure include, but are not limited to:
an eFuse connected to a selectable resistance;
a constant current limiting circuit;
a foldback current limiting circuit; and
a parallel resettable fuse arrangement of different amperage ratings arranged in series with relays that select which fuse is active.

An eFuse is an all-electronic, selectable-current-limiting fuse that when actuated stops current flow.

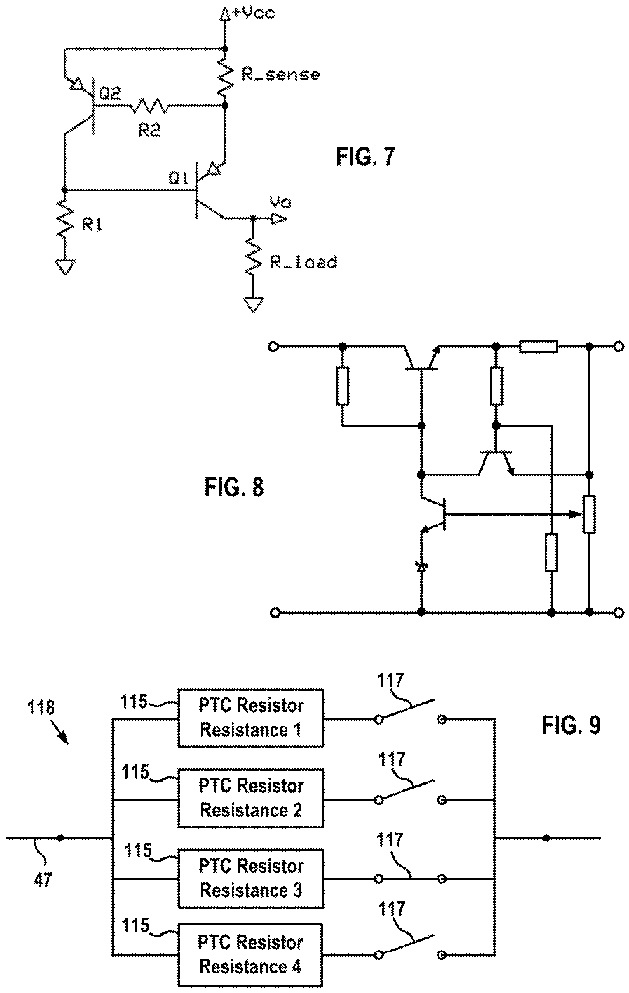

Constant current limiting circuits enable current to pass through until a maximum current is reached. The circuit then lowers the voltage to prevent current flow to exceed the maximum current flow. Figure 7 illustrates an exemplar constant current-limiting circuit that can be adapted for use with the present disclosure.

Foldback current limiting circuits enable current to pass through until a maximum current is reached. The circuit lowers the voltage and current to prevent current flow from exceeding the maximum current flow. Figure 8 illustrates an exemplar foldback current limiting circuit that can be adapted for use with the present disclosure. Image attribution: By Mikiemike at English Wikipedia, CC BY-SA 3.0, https://commons.wikimedia.org/w/index.php?curid=70852656.

Current limiting circuits utilize resistors to set the maximum current flow through the circuit. By utilizing variable-resistance resistors that enable dynamic selection of resistance in the design of these circuits, the maximum current flow through a circuit and hence the maximum power output of the circuit can be selected by selecting the resistance of the resistor.

Current limiting circuits can also be connected in series with a static switch driver such as the LTC7003 driver available from Analog Devices, Wilmington, Massachusetts, USA 01887 that enables sensing a relatively large voltage drop.

Figure 9 illustrates a selectable current-limiting device 118 formed as a parallel fuse arrangement that includes Positive Temperature Coefficient (PTC) resettable fuses that can automatically reopen after cooling. PTC fuses that may be adapted for use in accordance with this disclosure may be obtained from Eaton, Electronics Division, Cleveland, Ohio USA. The fuses 115 are each arranged in series with a relay 117 connected to and controlled by the controller 68. Closing a relay and keeping the other relays open enables the controller 90 to selectably insert a selected one of the fuses 115 in the channel power line 68.

In the illustrated embodiment the selectable-current-limiting device 118 includes an electronic fuse or eFuse. An eFuse is an example of an all-electronic, selectable-current-limiting fuse that, when actuated if the current exceeds a predetermined amperage, stops current flow through the channel 56. The eFuse does not depend on thermal heating and the subsequent open circuit of an inline element to stop current flow, reacts quickly, and can be reset easily.

The eFuse is attached to a digital potentiometer that has selectable resistance. The resistance of the digital potentiometer sets the current limit that will open the eFuse. In turn, the maximum power that can be transmitted through the channel 56 is determined by the current limit that will open the eFuse.

The controller 90 is connected to each current limiting device 118. When the field device is initially attached to the channel port 62, the controller 90 sets the maximum power output of the channel 56 by setting the resistance of the potentiometer to a resistance that limits the maximum channel power output to not greater than the minimum safe power output.

Figure 10 illustrates an embodiment of the selectable current-limiting device 118 disposed in a channel power line 68. The current-limiting device 118 includes an eFuse 120. The eFuse 120 is in line with the channel power line 68 such that current flowing through the channel power line 68 must flow through the eFuse 120. The eFuse 120 enables a resistor to be connected to the eFuse 120 that sets the current limit that will open the eFuse. Connecting a variable-resistance resistor to the eFuse 120 enables the current limit to be selectively changed based on the selected resistance of the variable-resistance resistor.

Efuses offer many advantages for controlling current flow. Efuses are available commercially as integrated circuit packages from Texas Instruments, Toshiba, STMicroelectronics, and other vendors. An eFuse should be selected based on amperage and voltage capacity, response speed, energy efficiency, and the like.

The eFuse 120 is attached to a digital potentiometer 122 that functions to enable setting different current limits to open the eFuse. Digital potentiometer integrated circuits are available from Analog Devices Inc., Microchip, Texas Instruments, and other suppliers.

The illustrated digital potentiometer 122 includes a resistor ladder 124 and an electronic switch 126 at each step of the ladder. In operation, one switch 126 is closed at a given time to determine the effective resistance of the digital potentiometer (similar to the action of a wiper of a conventional analog potentiometer).

The operating state of the set of switches 126 is controlled by a control unit 128 of the digital potentiometer that can receive commands from the controller 90 to set the resistance of the digital potentiometer. Digital potentiometers with control units compatible for connection to the controller 90 through I2C and SPI serial networks are commercially available.

The digital potentiometer 122 enables the resistance that sets the eFuse current limit to be selectively changed to open the eFuse at different maximum current flows and hence different maximum power outputs. When the field device is initially attached to the channel port 62, the controller 90 sets the maximum power output of the channel 56 by setting the resistance of the potentiometer 122 to a resistance that limits the maximum channel power output to not greater than the minimum safe power output.

Figure 11 illustrates the eFuse 120 with the digital potentiometer 122 set to a relatively high resistance suitable for setting a channel 56 to a lower maximum power output. A lower current flow through the eFuse 120 opens the eFuse.

Figure 9 illustrates the eFuse 120 with the digital potentiometer 122 set to a relatively low resistance suitable for setting a channel 56 to a higher maximum power output. A higher current flow through the eFuse 120 opens the eFuse.

Referring back to Figure 10, the illustrated current-limiting device 118 includes a microprocessor or MCU 130 that is connected to the control unit 128 by a UART circuit 132. The MCU 130 communicates with the control unit 128 whereby the control unit 128 sets the desired resistance of the digital potentiometer 122.

The MCU is connected to the controller 90 by an I2C network (not shown). The controller 90 has data applicable to the digital potentiometer 122 that enables the controller to command the MCU to set the potentiometer resistance to the desired resistance. The controller 90 can individually address each channel MCU 130 and is capable of directing the MCU 130 to set the desired resistance of the connected digital potentiometer 122 and thereby establish the maximum power output of each channel 56.

Figure 13 illustrates a switchable-resistor type of digital potentiometer 122 that can be used in place of the ladder-type digital potentiometer 122. The switchable-resistor digital potentiometer 122 replaces the resistor ladder 124 with a number of parallel resistors, each resistor in series with a respective programmable switch. The resistors can vary in values of resistance. Each switch can be selectively opened or closed by the control unit 128 to obtain the desired resistance.

After the controller 90 identifies the device protocol of an attached field device, the maximum power output of the channel 56 transmitting power to the field device can be increased to the maximum power set by the protocol. The controller 90 adjusts the selectable current-limiting device 118 as described to increase the maximum power output of the channel 56 from the minimum safe power output to the protocol power output.

If the attached field device is an APL field device, the controller 90 can also be configured to enable a user to selectively set the APL Power Class of the port 62 transmitting power to the field device. The APL standard defines multiple Power Classes that can be applied to each port of an APL field switch.

Use of selectable-current-limiting devices to selectively set APL field switch Power Classes is disclosed in the applicant's co-pending PCT patent application filed with the United States Patent and Trademark Office as Receiving Office on even date herewith at attorney docket no. 14-1381-PCT and entitled "APL Field Switch with Dynamic Power Allocation" .

The protocol detection circuitry 88 further includes a current meter 134 disposed in each channel 56 see Figure 3), each current meter connected as in input to the controller 90. Commercially available integrated circuit Hall-effect current sensors, for example, can be adapted for use in accordance with this disclosure.

If a data-only field device is attached to the channel 56, there is no need for the channel 56 to deliver power to the field device during protocol detection or normal operation of the field device. Each channel 56 includes a power relay 136 disposed in the channel power line 68 connected to and controlled by the controller 90. The channel data line 66 is between the channel power relay 136 and the channel port 62. Data can be transmitted through the channel data line regardless of the power relay 136 being open or closed.

When a field device is first attached to a channel port 62, the channel power relay 136 is closed and the channel 56 can deliver a minimum safe power to the field device. The controller 90 reads the channel current meter 134 to detect whether the field device is drawing power through the channel 56. This assists the controller in determining whether or not the field device is a data-only field device (no current, so no power draw) or is a power-and-data field device (current draw, so power draw).

If the controller 90 detects the field device is a data-only field device, the controller opens the channel power relay 136 so that power is not transmitted through the channel 56 to the field device. The controller 90 has determined the field device is a non-APL field device (the APL protocol being a power-and-data protocol) and so the field device only has to be connected to data-only protocol detection circuits 102 associated with data-only protocols for protocol detection.

If the controller 90 detects the field device is drawing power and that the field device is a data-and-power field device, the channel power relay 136 remains closed so that power is transmitted to the field device during protocol detection and during normal operation of the field device. The controller first attempts to detect the APL protocol, and if that is unsuccessful, connects the field device only to protocol detection circuits 102 associated with data-and-power protocols for protocol detection.

The controller 90 is not only active for protocol detection, but is also be active in setting the ability of a channel 56 to transmit power and, if the channel is transmitting power, in setting the maximum power output of the channel. Figure 14 summarizes the controller 90 connections to components related to each channel 56 and to each protocol detection circuit 102 for protocol detection and power control.

The controller 90 maintains in memory data related to the installed protocol detection circuits (for example, whether a data-only or power-and-data protocol detection circuit), relays associated with the protocol circuits and with the channels, and the like, and regularly reads the current meters to maintain in-memory state information about each channel, which may include current draw, current-limiting device power state, and the protocol of attached field devices.

When the controller determines a field device has been attached to a channel port, the controller initiates protocol detection to determine the protocol of the attached field device. A stepped current draw (an increase of current flow from zero flow, for example) on any given channel caused by connecting a field device to the channel can be detected by the controller monitoring the channel current meters. A step change in current draw can be used as an interrupt or event that causes the controller 90 to initiate protocol detection of the field device attached to the channel.

Figures 15 and 16 contain a flow chart illustrating the steps that the controller may take in determining the protocol of a field device attached to a channel port 62. The port's channel 56 is in an initial state wherein the channel power relay 136 is closed, the channel data relay 116 is open, and the channel protocol adapter detection relay 114 is open. The channel current-limiting device 118 is in its minimum safe power output state, and the channel pass-through connector 82 is attached.

After detecting the field device has been connected to the channel port 62, the controller reads the channel's current meter 134.

If there is no current draw, the controller 90 has determined the field device is a data-only field device. The controller opens the channel power relay 136 to disconnect the field device from power during protocol detection, and closes the channel's legacy protocol detection relay 114 to enable channel access the data-only protocol detection circuits (if any). The controller checks whether there are data-only protocol detection circuits, and if so, then sequentially closes each data-only protocol detection circuit relay 110 and issues a command to the field device until a response is received from the field device, thereby identifying the protocol of the field device. The controller may save in memory the detected protocol of the channel. The controller then displays the name of the detected protocol. If there are no data-only protocol detection circuits or **if** no response is received, the controller displays no protocol was detected. The controller opens the channel legacy protocol detection relay 114 to end the protocol detection process.

If there is current draw, the field device is a power-and-data field device. The controller then checks **if** the field device is an APL field device by closing the channel data relay 116 and issuing a command to the field device. If the field device responds, the controller sets the channel current-limiting device 118 state to that corresponding to the default APL port Power Class and displays that the APL protocol has been detected.

If the attached field device is an APL field device, the field device connection process is complete. The APL field device communicates and receives power through the channel port 62.

If no response is received, the APL field device is a legacy power-and-data field device. The controller attempts to detect the field device protocol as described above for data-only protocols but using only the power-and-data protocol detection circuits. If the protocol is detected, the controller 90 sets the channel current-limiting device state to a power state conforming to the protocol and displays the name of the detected protocol. If no protocol is detected the controller displays no protocol was detected. The controller opens the channel legacy protocol detection relay 114 to end the protocol detection process.

Communications between the controller and field device during protocol detection can be conducted at low speed. The controller 90, the channel 56, and the protocol detection circuits 102 need only the minimum hardware necessary to maintain low speed communications during protocol detection.

If the attached field device is detected to be a legacy non-APL field device, the field device connection process is not yet complete. The user must insert a compatible protocol adapter into the channel's protocol adapter connector to enable data communication between the network trunk 28 and the connected field device. The protocol adapter contains the more expensive legacy hardware required for high-speed data communications with the legacy field device.

The user removes the channel cover 88 and channel pass-through 82 and inserts the protocol adapter into the protocol adapter connecter 72. The protocol adapter is now connected in series with the channel power line 68. The protocol adapter has a data line that converts between APL Ethernet-formatted data and field device formatted data for high speed, two-way data communication between the field device and the network trunk.

Figure 17 illustrates a protocol adapter 138 compatible with a power-and data Profibus PA or Foundation Fieldbus power-and-data field device. The protocol adapter 138 includes a power line 140 having end terminals 142, 144 that connect to the connector terminals 78, 80 and place the power line 140 in series with a channel power line 68 when the adapter is installed in a protocol adapter connector 72. Power transmitted through the protocol adapter is also used to power the protocol adapter.

A data line 146 with opposite ends connected to the adapter power line 140 extends in parallel with the adapter power line and extracts data from and injects data from the adapter power line.

The adapter data line 146 includes a legacy data line segment 148 and an APL data line segment 150 that extend from opposite ends of the channel power line 140. The legacy data line segment 148 extends from the channel port-side of the adapter power segment. The legacy data line segment is connected to a legacy transceiver 152 capable of receiving and transmitting Profibus/FF formatted data. The legacy transceiver 152 is in turn connected to a Fieldbus or Profibus DP ASIC (application-specific integrated circuit) 154 that enables high speed data transmission through the legacy transceiver 152.

The APL data line segment 150 is connected to an APL transceiver 156 that enables high speed data transmission of APL Ethernet formatted data. Disposed between the APL transceiver 156 and the Profibus/FF ASIC 154 is a CPU that functions as a protocol converter 158 that converts the data stream passing through the data line 146 between APL Ethernet and Profibus/FF data formats.

The adapter data line 148 functions to translate APL Ethernet formatted data being transmitted to the field device to Profibus/FF data compatible being transmitted to the field device and functions to translate Profibus/FF formatted data being transmitted from the field device to the APL field switch data terminals to APL Ethernet formatted data being transmitted to the APL field switch data terminals.

The protocol adapter 138 may also include a communications line segment 160 that connects to the controller 90 independently for communication between the controller and the adapter CPU 158 when the protocol adapter is inserted into the protocol adapter connector 72. At power-up the protocol adapter 138 can communicate its presence and its protocol to the controller 90. The controller can verify that the adapter protocol is the same as the detected protocol, and **if** not, open the channel power relay and warn the user of the protocol mismatch.

Figure 18 illustrates a protocol adapter 162 similar to the protocol adapter 138 but compatible with a data-only Modbus RTU field device. The adapter power line 164 does not transmit power through the power adapter but instead is configured to draw power from the channel power line 68 to power the protocol adapter only.

The illustrated protocol adapter 162 includes a communications line segment 166. When the protocol adapter 162 is installed in the protocol adapter connector 72, the controller 90 detects the connection to the communications line segment 160 and opens the channel power line 68 to power the installed protocol adapter 162. The protocol adapter 162 can then communicate its presence to the controller for protocol verification as discussed with respect to the power-and-data protocol adapter 138.

Figure 19 illustrates the APL field switch 30 having a number of installed protocol adapters 138 (spur lines and field devices are not shown).

Figure 20 illustrates a second embodiment APL field switch 168. The APL field switch 168 is similar to the APL field switch 30 includes no protocol detection circuits to detect the protocol of a field device when the field device is first connected to a channel port. Current meters can be eliminated. When attaching a non-APL field device to a port channel, a user is responsible for inserting a compatible protocol adapter such as a protocol adapter 138 or a protocol adapter 162 in the channel's protocol adapter connector 72 to complete connection of the field device to the APL field switch. A protocol adapter can include a communications line segment as previously described to communicate its presence and protocol to the controller to enable the controller 90 to set the proper power state of the channel current-limiting device based on the protocol.

When attaching an APL field device to a port channel with the power adapter pass-through 82 installed, the APL field device 168 detects the field device connection, can determine there is no protocol adapter in place, can confirm the installation of an APL field device, and can then set the channel current-limiting device power state to that associated with the default Power Class of the port.

When using an APL field switch 168, a user may wish to utilize protocol detection to identify or verify the protocol of a field device before attaching the field device to the APL field switch. Figure 21 illustrates a battery-powered handheld protocol detection tool 170 containing the protocol detection circuitry shown in Figure 22. The detection tool contains selectably connectable protocol detection circuits 102 like the protocol detection circuits 102 in the APL field switch 32. The protocol detection circuits 102 are connected to an APL channel 56 like the channel 56 in the APL field switch 32 but extending continuously without a protocol adapter connector to a two-wire port 62. The tool has a controller 90 that determines the field device as previously described for the APL field switch 30.

A user connects the field device D to the port 62 using a two-wire spur S. The tool controller 90 goes through its protocol detection routine as shown in Figures 12 and 13. The protocol detection result can be displayed on the tool display and/or reported via wired or wireless connection to a smartphone, tablet, computer, or the like.

A relay in accordance with this disclosure can be an analog relay, a transistor relay, a mechanical relay, or equivalent. A data line being an electrical conductor can transmit data, including commands and responses, as an electrical signal compliant with the field device protocol in which the data line receives the data.

While this disclosure includes one or more illustrative embodiments described in detail, it is understood that the one or more embodiments are each capable of modification and that the scope of this disclosure is not limited to the precise details set forth herein but include such modifications that would be obvious to a person of ordinary skill in the relevant art including (but not limited to) changes in material selection, size, number of protocol detection circuits, field device protocols associated with the protocol detection circuits, and the like, as well as such changes and alterations that fall within the purview of the following claims.

## Claims

1. A method performed by a controller of a field switch for automatic protocol detection of a field device (26, 36) for a process control network (10) in response to the field device (26, 36) being attached to a port (62) of the field switch (30, 32) of the process control network (10), the field switch (30, 32) comprising a plurality of ports (62) and a plurality of channels (56), each port (62) being connected to a respective channel (56), each port (62) being configured to connect a field device (26, 36) to the channel (56) connected to the port (62), each channel (56) being configurable to transmit data to and from the port (62) connected to the channel (56), the field switch (30, 32) comprising a set of one or more protocol detection circuits (102), each protocol detection circuit (102) of the set of one or more protocol detection circuits (102) being compatible with a respective field device protocol different from the field device protocols of the remainder of the set of one or more protocol detection circuits (102) and being capable of transmitting data to and receiving data from the port (62) connected to the channel (56) when connected to the channel (56), the set of one or more protocol detection circuits (102) not being connected directly to any channel (56) of the plurality of channels (56) at the start of the method, the method comprising the steps of:
a) in response to attaching a field device (26, 36) to a port (62) of the plurality of ports (62) of the field switch (30, 32), connecting a first protocol detection circuit (102) of the set of one or more protocol detection circuits (102) to the channel (56) connected to the port (62) while maintaining the other protocol detection circuits (102) disconnected from the channel (56);
b) attempting to communicate with the attached field device (26, 36) through the protocol detection circuit (102) connected to the channel (56) using the protocol of the protocol detection circuit (102) connected to the channel (56);
c) upon determining in step b) that the attached field device (26, 36) is compatible with the protocol of the first protocol detection circuit (102), identify the field device (26, 36) as having a protocol associated with the first protocol detection circuit (102) and then performing steps d) and e): :
d) disconnecting the first protocol detection circuit (102) from the channel (56); and
e) ending the automatic protocol detection;
f) upon determining in step b) that the field device (26, 36) is not compatible with the protocol of the first protocol detection circuit (102), proceed with the steps of:
g) disconnecting the first protocol detection circuit (102) from the channel (56);
h) determining whether there are remaining protocol detection circuits (102) in the set of one or more protocol detection circuits (102) that have not been connected to the channel (56);
i) upon determining in step h) that there are no remaining protocol detection circuits (102) that have not been connected to the channel (56), performing the steps j) and k)**:**
j) identifying the field device (26, 36) as having an unidentified protocol; and
k) ending the automatic protocol detection; and
l) upon determining in step h) that there are one or more protocol detection circuits (102) that have not been connected to the channel (56), repeating the method starting at step a) with the next protocol detection circuit (102) of the set of one or more protocol detection circuits (102) that has not been connected to the channel (56) connected to the field device (26, 36) in place of the first protocol detection circuit (102), whereby at the end of the method all the protocol detection circuits (102) of the set of one or more protocol detection circuits (102) are disconnected from the plurality of channels (56).

2. The method of claim 1 wherein step b) comprises the steps of:
m) transmitting a command to the field device (26, 36) through the first protocol detection circuit (102); and
n) determining whether the field device (26, 36) responded to the command or did not respond to the command.

3. The method of claim 1 wherein the channel (56) connected to the port (62) comprises a power line connected to a power source whereby the connected field device (26, 36) can receive power through the power line when connected to the channel (56), and step a) comprises the steps of:
m) in response to attaching the field device (26, 36) to the port (62), determining whether the field device (26, 36) is drawing power through the power line before connecting the first protocol circuit to the channel (56);
n) upon determining in step m) that the field device (26, 36) is not drawing power through the power line, when performing the method connecting to the channel (56) only those protocol detection circuits (102) of the set of one or more protocol detection circuits (102) that are associated with data-only protocols; and
o) upon determining in step m) that the field device (26, 36) is drawing power through the power line, when performing the method connecting to the channel (56) only those protocol detection circuits (102) of the set of one or more protocol detection circuits (102) that are associated with data-and-power protocols.

4. The method of claim 1 wherein the channel (56) connected to the port (62) comprises a power line whereby the connected field device (26, 36) can receive power through the power line when connected to the channel (56), and step a) comprises the steps of:
m) in response to attaching the field device (26, 36) to the port (62), determining whether the field device (26, 36) is drawing power through the power line before connecting the first protocol circuit to the channel (56);
n) upon determining in step m) that the field device (26, 36) is not drawing power, opening the power line to prevent power from being transmitted through the channel (56) to the field device (26, 36) while the field device (26, 36) is attached to the port (62).

5. The method of claim 1 wherein the channel (56) connected to the port (62) comprises a power line whereby the connected field device (26, 36) can receive power through the power line when connected to the channel (56), and step a) comprises the step of:
m) in response to attaching the field device (26, 36) to the port (62), limiting the power being transmitted through the power line to a minimum safe power for protection of the attached field device (26, 36) while attempting to determine the protocol of the field device (26, 36).

6. The method of claim 5 wherein step e) comprises the step of:
o) before ending the the automatic protocol detection, increasing the power transmitted to the field device (26, 36) to at most the maximum power permitted by the identified protocol.

7. The method of claim 1 wherein the one or more protocol detection circuits (102) are each selectively connectable and dis-connectable with each channel (56) of the plurality of channels (56), and each protocol detection circuit (102) comprises a first relay, and step a) comprises the step of:
m) closing the first relay of the first protocol detection circuit (102) as part of connecting the first protocol detection circuit (102) to the channel (56) connected to the field device (26, 36); and
step d) comprises the step of:
n) opening the first relay of the first protocol detection circuit closed in step
m) as part of disconnecting the first protocol detection circuit (102) attached to the channel (56) from the channel (56).

8. The method of claim 7 wherein each channel (56) of the plurality of channels (56) is configured to transmit data through the channel (56) compatible with a channel protocol not associated with any protocol detection circuit (102) of the set of one or more protocol detection circuits (102);
each channel (56) of the plurality of channels (56) comprises a data line being configured to transmit data through the channel (56) using the channel protocol;
the data line of each channel (56) of the plurality of channels (56) comprises a respective second relay in the data line; and
step a) comprises the steps of:
o) in response to attaching a field device (26, 36) to a port (62) of the plurality of ports (62) of the field switch (30, 32) but before connecting any protocol detection circuit of the set of one or more protocol detection circuits to the channel, transmitting data using the channel protocol through the data line of the channel (56) while maintaining the second relay in the data line of the channel (56) in a closed state and all the first relays in the set of one or more protocol detection circuits (102) in an open state to determine whether the field device (26, 36) is compatible with the channel protocol; and
p) upon determining in step o) that the field device (26, 36) is compatible with the channel protocol, identifying the field device (26, 36) as having the channel protocol and terminating the method.

9. The method of claim 8 wherein step e) further comprises, before ending the automatic protocol detection, the steps of:
r) attaching a protocol adapter (138) compatible with the identified protocol in a protocol adapter connector (72) disposed in the channel (56), the protocol adapter (138) being configured to translate between the identified protocol and the channel protocol.

10. The method of claim 7 wherein each protocol detection circuit (102) of the set of one or more protocol detection circuits (102) is connected in parallel with each channel (56) of the plurality of channels (56) by a respective data line (104, 108, 112-1, ...) extending from the protocol detection circuit (102) to the channel (56), each data line (104, 108, 112-1, ...) comprising a respective third relay (114) in the data line (104, 108, 112-1, ...), and step (a) further comprises the step of:
o) closing the third relay in the data line (104, 108, 112-1, ...) extending from first protocol detection circuit (102) to the channel (56) connected to the port (62) as part of connecting the first protocol detection circuit (102) to the channel (56); and steps e) and k) each comprise the step of:
p) as part of ending the automatic protocol detection, opening the third relay closed in step o) and thereby disconnecting the channel (56) from all the protocol detection circuits (102) of the set of two or more protocol detection circuits (102).

11. The method of claim 10 wherein the set of one or more protocol detection circuits (102) comprises a set of two or more protocol detection circuits (102) and step l) comprises the step of:
q) maintaining the closed third relay in the closed state while repeating the method with the next protocol detection circuit (102).

12. The method of claim 1 wherein each channel (56) of the plurality of channels (56) is configured to transmit data compatible with a channel protocol not associated with any protocol of the set of one or more protocol detection circuits (102); and
step a) comprises the steps of:
m) before connecting the first protocol detection circuit (102) to the channel (56), when starting the method, determining whether the field device (26, 36) is compatible with the channel protocol;
n) upon determining in step m) that the field device (26, 36) is compatible with the channel protocol, identifying the field device (26, 36) as having the channel protocol and terminating the method without connecting any protocol detection circuit (102) of the set of one or more protocol detection circuits (102) to the channel (56); and
o) upon determining in step n) that the field device (26, 36) is not compatible with the channel protocol, continuing with step a) by connecting the first protocol detection circuit (102) of the set of one or more protocol detection circuits (102) with the channel (56).

13. The method of claim 12 wherein each channel (56) of the plurality of channels (56) comprises a respective protocol adapter connector (72), the protocol adapter connector (72) being capable of receiving a protocol adapter (138) that, when attached to the protocol adapter connector (72), converts data transmitted through the protocol adapter connector (72) between the channel protocol and a field device protocol different than the channel protocol; and
step e) comprises the step of:
p) before ending the automatic protocol detection, attaching a protocol adapter (138) compatible with the identified field device protocol to the protocol adapter connector (72) of the channel (56) connected to the port (62).

14. The method of claim 13 wherein the protocol adapter connector (72) of each channel (56) of the plurality of channels (56) normally opens the channel (56); and step a) comprises the step of:
q) before performing step m), providing electrical continuity across the protocol adapter connector (72) of the channel (56) connected to the field device (26, 36).

15. The method of claim 13 wherein:
step q) comprises attaching a pass-through connector (82) to the protocol adapter connector (72) of the channel (56) connected to the field device (26, 36), the attached pass-through connector (82) providing channel continuity across the protocol adapter connector (72); and
step p) comprises, prior to attaching the protocol adapter (138) to the protocol adapter connector (72), removing the pass-through connector (82) attached to the protocol adapter connector (72) in step q) from the protocol adapter connector (72).

16. The method of claim 14 wherein the field switch (30, 32) comprises a plurality of slots (84), each slot (84) being open to a respective protocol adapter connector (72) of the plurality of channels (56) to receive a protocol adapter (138) into the slot (84);
step q) comprises attaching a cover (86) to the field switch (30, 32) closing the slot (84) open to the protocol adapter connector (72) of the channel (56) connected to the port (62), the cover (86) when attached to the field switch (30, 32) providing channel continuity across the protocol adapter connector (72); and
step p) comprises removing the cover (86) from the field device (26, 36) to open the slot (84) prior to attaching the protocol adapter (138) to the protocol adapter connector (72).

17. The method of claim 12 wherein the channel protocol of each channel (56) of the plurality of channels (56) is compatible with the Ethernet Advanced Physical Layer, APL, specification.

18. The method of claim 1 wherein the field switch (30, 32) can transmit power through the plurality of channels (56) to field devices (26, 36) connected to the channels (56) of the plurality of channels (56), and prior to performing step a), the method comprises the steps of:
m) detecting a start of power transmission through a channel (56) of the plurality of channels (56) to detect a field device (26, 36) has been connected to the channel (56); and
n) initiating step a) in response to detecting the connection of the field device (26, 36) to the channel (56).

19. The method of claims 1-18 wherein the field switch (30, 32) controller (90) is connected to each channel (56) of the plurality of channels (56) and to each protocol detection circuit (102) of the set of one or more protocol detection circuits (102).

20. The method of claim 19 wherein step c) comprises the controller (90) generating an output signal used to identify to a user of the field switch (30, 32) the identified protocol of the field device (26, 36).

## Patentansprüche

1. Verfahren, das durch eine Steuereinrichtung eines Feldschalters durchgeführt wird, zur automatischen Protokollerkennung eines Feldgeräts (26, 36) für ein Prozesssteuerungsnetzwerk (10) als Reaktion darauf, dass das Feldgerät (26, 36) an einen Anschluss (62) des Feldschalters (30, 32) des Prozesssteuerungsnetzwerks (10) angeschlossen wird, wobei der Feldschalter (30, 32) eine Vielzahl von Anschlüssen (62) und eine Vielzahl von Kanälen (56) umfasst, wobei jeder Anschluss (62) mit einem jeweiligen Kanal (56) verbunden ist, wobei jeder Anschluss (62) dazu eingerichtet ist, ein Feldgerät (26, 36) mit dem an den Anschluss (62) angeschlossenen Kanal (56) zu verbinden, wobei jeder Kanal (56) dazu einrichtbar ist, Daten zu und von dem mit dem Kanal (56) verbundenen Anschluss (62) zu übertragen, wobei der Feldschalter (30, 32) eine Gruppe von einer oder mehreren Protokollerkennungsschaltungen (102) umfasst, wobei jede Protokollerkennungsschaltung (102) der Gruppe von einer oder mehreren Protokollerkennungsschaltungen (102) mit einem jeweiligen Feldgeräteprotokoll kompatibel ist, das sich von den Feldgeräteprotokollen der übrigen Protokollerkennungsschaltungen der Gruppe von einer oder mehreren Protokollerkennungsschaltungen (102) unterscheidet, und dazu in der Lage ist, Daten an den mit dem Kanal (56) verbundenen Anschluss (62) zu senden und Daten von diesem zu empfangen, wenn sie mit dem Kanal (56) verbunden ist, wobei die Gruppe von einer oder mehreren Protokollerkennungsschaltungen (102) zu Beginn des Verfahrens nicht direkt mit einem Kanal (56) der Vielzahl von Kanälen (56) verbunden ist, wobei das Verfahren die folgenden Schritte umfasst:
a) als Reaktion auf das Anschließen eines Feldgeräts (26, 36) an einen Anschluss (62) der Vielzahl von Anschlüssen (62) des Feldschalters (30, 32) Verbinden einer ersten Protokollerkennungsschaltung (102) aus der Gruppe von einer oder mehreren Protokollerkennungsschaltungen (102) mit dem an den Anschluss (62) angeschlossenen Kanal (56), während die anderen Protokollerkennungsschaltungen (102) vom Kanal (56) getrennt bleiben;
b) Versuchen, über die mit dem Kanal (56) verbundene Protokollerkennungsschaltung (102) unter Verwendung des Protokolls der mit dem Kanal (56) verbundenen Protokollerkennungsschaltung (102) mit dem angeschlossenen Feldgerät (26, 36) zu kommunizieren;
c) auf Feststellen in Schritt b), dass das angeschlossene Feldgerät (26, 36) mit dem Protokoll der ersten Protokollerkennungsschaltung (102) kompatibel ist, Identifizieren des Feldgerätes (26, 36) als ein Gerät, das ein der ersten Protokollerkennungsschaltung (102) zugeordnetes Protokoll aufweist, und anschließendes Ausführen der Schritte d) und e):
d) Trennen der ersten Protokollerkennungsschaltung (102) vom Kanal (56); und
e) Beenden der automatischen Protokollerkennung;
f) auf Feststellen in Schritt b), dass das Feldgerät (26, 36) nicht mit dem Protokoll der ersten Protokollerkennungsschaltung (102) kompatibel ist, Ausführen der folgenden Schritte:
g) Trennen der ersten Protokollerkennungsschaltung (102) vom Kanal (56);
h) Feststellen, ob in der Gruppe von einer oder mehreren Protokollerkennungsschaltungen (102) noch Protokollerkennungsschaltungen (102) vorhanden sind, die noch nicht mit dem Kanal (56) verbunden wurden;
i) auf Feststellen in Schritt h), dass keine verbleibenden Protokollerkennungsschaltungen (102) vorhanden sind, die noch nicht mit dem Kanal (56) verbunden wurden, Ausführen der Schritte j) und k):
j) Identifizieren des Feldgeräts (26, 36) als ein Gerät, das ein nicht identifiziertes Protokoll aufweist; und
k) Beenden der automatischen Protokollerkennung; und
l) auf Feststellen in Schritt h), dass eine oder mehrere Protokollerkennungsschaltungen (102) vorhanden sind, die noch nicht mit dem Kanal (56) verbunden wurden, Wiederholen des Verfahrens beginnend mit Schritt a) mit der nächsten Protokollerkennungsschaltung (102) aus der Gruppe von einer oder mehreren Protokollerkennungsschaltungen (102), die noch nicht mit dem Kanal (56) verbunden wurde, der mit dem Feldgerät (26, 36) verbunden ist, anstelle der ersten Protokollerkennungsschaltung (102),
wodurch am Ende des Verfahrens alle Protokollerkennungsschaltungen (102) der Gruppe von einer oder mehreren Protokollerkennungsschaltungen (102) von der Vielzahl von Kanälen (56) getrennt wird.

2. Verfahren nach Anspruch 1, wobei Schritt b) die folgenden Schritte umfasst:
m) Senden eines Befehls an das Feldgerät (26, 36) über die erste Protokollerkennungsschaltung (102); und
n) Feststellen, ob das Feldgerät (26, 36) auf den Befehl geantwortet hat oder nicht auf den Befehl geantwortet hat.

3. Verfahren nach Anspruch 1, wobei der mit dem Anschluss (62) verbundene Kanal (56) eine mit einer Stromquelle verbundene Stromleitung umfasst, wodurch das angeschlossene Feldgerät (26, 36) über die Stromleitung mit Strom versorgt werden kann, wenn es an den Kanal (56) angeschlossen ist, und wobei Schritt a) die folgenden Schritte umfasst:
m) als Reaktion auf Anschließen des Feldgeräts (26, 36) an den Anschluss (62) Feststellen, ob das Feldgerät (26, 36) über die Stromleitung Strom bezieht, bevor die erste Protokollschaltung mit dem Kanal (56) verbunden wird;
n) auf Feststellen in Schritt m), dass das Feldgerät (26, 36) keinen Strom über die Stromleitung bezieht, Verbinden bei der Durchführung des Verfahrens mit dem Kanal (56) nur derjenigen Protokollerkennungsschaltungen (102) aus der Gruppe von einer oder mehreren Protokollerkennungsschaltungen (102), die reinen Datenprotokollen zugeordnet sind; und
o) auf Feststellen in Schritt m), dass das Feldgerät (26, 36) über die Stromleitung Strom bezieht, Verbinden bei der Durchführung des Verfahrens nur derjenigen Protokollerkennungsschaltungen (102) aus der Gruppe von einer oder mehreren Protokollerkennungsschaltungen (102) mit dem Kanal (56), die Daten- und Stromprotokollen zugeordnet sind.

4. Verfahren nach Anspruch 1, wobei der mit dem Anschluss (62) verbundene Kanal (56) eine Stromleitung umfasst, wodurch das angeschlossene Feldgerät (26, 36) über die Stromleitung Strom beziehen kann, wenn es an den Kanal (56) angeschlossen ist, und wobei Schritt a) die folgenden Schritte umfasst:
m) als Reaktion auf Anschließen des Feldgeräts (26, 36) an den Anschluss (62) Feststellen, ob das Feldgerät (26, 36) über die Stromleitung Strom bezieht, bevor die erste Protokollschaltung mit dem Kanal (56) verbunden wird;
n) auf Feststellen in Schritt m), dass das Feldgerät (26, 36) keinen Strom bezieht, Öffnen der Stromleitung, um zu verhindern, dass Strom über den Kanal (56) an das Feldgerät (26, 36) übertragen wird, während das Feldgerät (26, 36) an den Anschluss (62) angeschlossen ist.

5. Verfahren nach Anspruch 1, wobei der mit dem Anschluss (62) verbundene Kanal (56) eine Stromleitung umfasst, wodurch das angeschlossene Feldgerät (26, 36) über die Stromleitung Strom beziehen kann, wenn es an den Kanal (56) angeschlossen ist, und wobei Schritt a) den folgenden Schritt umfasst:
m) als Reaktion auf Anschließen des Feldgeräts (26, 36) an den Anschluss (62) Begrenzen des über die Stromleitung übertragenen Stroms auf ein minimal sicheren Strom zum Schutz des angeschlossenen Feldgeräts (26, 36), während versucht wird, das Protokoll des Feldgeräts (26, 36) zu ermitteln.

6. Verfahren nach Anspruch 5, wobei Schritt e) den folgenden Schritt umfasst:
o) vor Beenden der automatischen Protokollerkennung Erhöhen des an das Feldgerät (26, 36) übertragenen Stroms auf höchstens den vom identifizierten Protokoll zugelassenen maximalen Strom.

7. Verfahren nach Anspruch 1, wobei die eine oder mehreren Protokollerkennungsschaltungen (102) jeweils selektiv mit jedem Kanal (56) der Vielzahl von Kanälen (56) verbindbar und von diesen trennbar ist und jede Protokollerkennungsschaltung (102) ein erstes Relais umfasst, und wobei Schritt a) den folgenden Schritt umfasst:
m) Schließen des ersten Relais der ersten Protokollerkennungsschaltung (102) als Teil des Verbindens der ersten Protokollerkennungsschaltung (102) mit dem Kanal (56), der mit dem Feldgerät (26, 36) verbunden ist; und Schritt d) den folgenden Schritt umfasst:
n) Öffnen des in Schritt m) geschlossenen ersten Relais der ersten Protokollerkennungsschaltung als Teil des Trennens der an den Kanal (56) angeschlossenen ersten Protokollerkennungsschaltung (102) vom Kanal (56).

8. Verfahren nach Anspruch 7, wobei jeder Kanal (56) der Vielzahl von Kanälen (56) dazu eingerichtet ist, Daten über den Kanal (56) zu übertragen, die mit einem Kanalprotokoll kompatibel sind, das keiner Protokollerkennungsschaltung (102) aus der Gruppe von einer oder mehreren Protokollerkennungsschaltungen (102) zugeordnet ist;
wobei jeder Kanal (56) der Vielzahl von Kanälen (56) eine Datenleitung umfasst, die dazu eingerichtet ist, Daten unter Verwendung des Kanalprotokolls über den Kanal (56) zu übertragen;
wobei die Datenleitung jedes Kanals (56) der Vielzahl von Kanälen (56) ein jeweiliges zweites Relais in der Datenleitung umfasst; und
wobei Schritt a) die folgenden Schritte umfasst:
o) als Reaktion auf Anschließen eines Feldgeräts (26, 36) an einen Anschluss (62) der Vielzahl von Anschlüssen (62) des Feldschalters (30, 32), jedoch vor Anschließen einer Protokollerkennungsschaltung aus der Gruppe von einer oder mehreren Protokollerkennungsschaltungen an den Kanal, Übertragen von Daten unter Verwendung des Kanalprotokolls über die Datenleitung des Kanals (56), während das zweite Relais in der Datenleitung des Kanals (56) in einem geschlossenen Zustand und alle ersten Relais in der Gruppe von einer oder mehreren Protokollerkennungsschaltungen (102) in einem offenen Zustand gehalten werden, um festzustellen, ob das Feldgerät (26, 36) mit dem Kanalprotokoll kompatibel ist; und
p) auf Feststellen in Schritt o), dass das Feldgerät (26, 36) mit dem Kanalprotokoll kompatibel ist, Identifizieren des Feldgeräts (26, 36) als ein Gerät, das das Kanalprotokoll aufweist, und Beenden der automatischen Protokollerkennung.

9. Verfahren nach Anspruch 8, wobei Schritt e) vor Beenden der automatischen Protokollerkennung ferner die folgenden Schritte umfasst:
r) Anschließen eines mit dem identifizierten Protokoll kompatiblen Protokolladapters (138) an einen im Kanal (56) angeordneten Protokolladapterverbinder (72), wobei der Protokolladapter (138) dazu eingerichtet ist, zwischen dem identifizierten Protokoll und dem Kanalprotokoll zu übersetzen.

10. Verfahren nach Anspruch 7, wobei jede Protokollerkennungsschaltung (102) der Gruppe von einer oder mehreren Protokollerkennungsschaltungen (102) mit jedem Kanal (56) der Vielzahl von Kanälen (56) durch eine jeweilige Datenleitung (104, 108, 112-1, ...) parallel verbunden ist, die sich von der Protokollerkennungsschaltung (102) zum Kanal (56) erstreckt, wobei jede Datenleitung (104, 108, 112-1, ...) ein jeweiliges drittes Relais (114) in der Datenleitung (104, 108, 112-1, ...) umfasst, und wobei Schritt a) ferner den folgenden Schritt umfasst:
o) Schließen des dritten Relais in der Datenleitung (104, 108, 112-1, ...), die sich von der ersten Protokollerkennungsschaltung (102) zum Kanal (56) erstreckt, der mit dem Anschluss (62) verbunden ist, als Teil vom Verbinden der ersten Protokollerkennungsschaltung (102) mit dem Kanal (56); und die Schritte e) und k) jeweils den folgenden Schritt umfassen:
p) als Teil vom Beenden der automatischen Protokollerkennung Öffnen des in Schritt o) geschlossenen dritten Relais und dadurch Trennen des Kanal (56) von allen Protokollerkennungsschaltungen (102) der Gruppe von zwei oder mehr Protokollerkennungsschaltungen (102).

11. Verfahren nach Anspruch 10, wobei die Gruppe von einer oder mehreren Protokollerkennungsschaltungen (102) eine Gruppe von zwei oder mehr Protokollerkennungsschaltungen (102) umfasst und wobei Schritt l) den folgenden Schritt umfasst:
q) Aufrechterhalten des geschlossenen dritten Relais im geschlossenen Zustand, während das Verfahren mit der nächsten Protokollerkennungsschaltung (102) wiederholt wird.

12. Verfahren nach Anspruch 1, wobei jeder Kanal (56) der Vielzahl von Kanälen (56) dazu eingerichtet ist, Daten zu übertragen, die mit einem Kanalprotokoll kompatibel sind, das keinem Protokoll der Gruppe von einer oder mehreren Protokollerkennungsschaltungen (102) zugeordnet ist; und Schritt a) die folgenden Schritte umfasst:
m) vor Verbinden der ersten Protokollerkennungsschaltung (102) mit dem Kanal (56) beim Beginnen des Verfahrens Feststellen, ob das Feldgerät (26, 36) mit dem Kanalprotokoll kompatibel ist;
n) auf Feststellen in Schritt m), dass das Feldgerät (26, 36) mit dem Kanalprotokoll kompatibel ist, Identifizieren des Feldgeräts (26, 36) als ein Gerät, das das Kanalprotokoll aufweist, und Beenden des Verfahrens, ohne eine Protokollerkennungsschaltung (102) aus der Gruppe von einer oder mehreren Protokollerkennungsschaltungen (102) an den Kanal (56) anzuschließen; und
o) auf Feststellen in Schritt n), dass das Feldgerät (26, 36) nicht mit dem Kanalprotokoll kompatibel ist, Fortfahren mit Schritt a) durch Verbinden der ersten Protokollerkennungsschaltung (102) aus der Gruppe von einer oder mehreren Protokollerkennungsschaltungen (102) mit dem Kanal (56).

13. Verfahren nach Anspruch 12, wobei jeder Kanal (56) der Vielzahl von Kanälen (56) einen jeweiligen Protokolladapterverbinder (72) umfasst, wobei der Protokolladapterverbinder (72) dazu in der Lage ist, einen Protokolladapter (138) aufzunehmen, der, wenn er an den Protokolladapterverbinder (72) angeschlossen ist, über den Protokolladapterverbinder (72) übertragene Daten zwischen dem Kanalprotokoll und einem Feldgeräteprotokoll umwandelt, das sich vom Kanalprotokoll unterscheidet; und Schritt e) den Schritt umfasst:
p) vor Beenden der automatischen Protokollerkennung Anschließen eines Protokolladapters (138), der mit dem identifizierten Feldgeräteprotokoll kompatibel ist, an den Protokolladapterverbinder (72) des mit dem Anschluss (62) verbundenen Kanals (56).

14. Verfahren nach Anspruch 13, wobei der Protokolladapterverbinder (72) jedes Kanals (56) der Vielzahl von Kanälen (56) den Kanal (56) normalerweise öffnet; und Schritt a) den Schritt umfasst:
q) vor Ausführen von Schritt m) Herstellen einer elektrischen Durchgängigkeit über den Protokolladapterverbinder (72) des mit dem Feldgerät (26, 36) verbundenen Kanals (56).

15. Verfahren nach Anspruch 13, wobei:
Schritt q) Anschließen eines Durchgangssteckers (82) an dem Protokolladapterverbinder (72) des mit dem Feldgerät (26, 36) verbundenen Kanals (56) umfasst, wobei der angeschlossene Durchgangsstecker (82) eine Kanalkontinuität über den Protokolladapterverbinder (72) hinweg herstellt; und
Schritt p) vor Anschließen des Protokolladapters (138) an dem Protokolladapterverbinder (72) Entfernen des in Schritt q) an dem Protokolladapterverbinder (72) angeschlossenen Durchgangssteckers (82) von dem Protokolladapterverbinder (72) umfasst.

16. Verfahren nach Anspruch 14, wobei der Feldschalter (30, 32) eine Vielzahl von Steckplätzen (84) umfasst, wobei jeder Steckplatz (84) zu einem jeweiligen Protokolladapterverbinder (72) der Vielzahl von Kanälen (56) hin offen ist, um einen Protokolladapter (138) in den Steckplatz (84) aufzunehmen;
Schritt q) Anschließen einer Abdeckung (86) an dem Feldschalter (30, 32), wodurch der zum Protokolladapterverbinder (72) des mit dem Anschluss (62) verbundenen Kanals (56) offene Steckplatz (84) verschlossen wird, wobei die Abdeckung (86), wenn sie am Feldschalter (30, 32) angeschlossen ist, eine Kanalkontinuität über den Protokolladapterverbinder (72) hinweg herstellt; und
Schritt (p) Entfernen der Abdeckung (86) vom Feldgerät (26, 36) umfasst, um den Steckplatz (84) zu öffnen, vor Anschließen des Protokolladapters (138) am Protokolladapterverbinder (72).

17. Verfahren nach Anspruch 12, wobei das Kanalprotokoll jedes Kanals (56) der Vielzahl von Kanälen (56) mit der Ethernet Advanced Physical Layer (APL)-Spezifikation kompatibel ist.

18. Verfahren nach Anspruch 1, wobei der Feldschalter (30, 32) über die Vielzahl von Kanälen (56) Strom an Feldgeräte (26, 36) übertragen kann, die mit den Kanälen (56) der Vielzahl von Kanälen (56) verbunden sind, und wobei das Verfahren vor Ausführen von Schritt a) die folgenden Schritte umfasst:
m) Erkennen eines Beginns der Stromübertragung über einen Kanal (56) der Vielzahl von Kanälen (56), um zu erkennen, dass ein Feldgerät (26, 36) an den Kanal (56) angeschlossen wurde; und
n) Einleiten von Schritt a) als Reaktion auf Erkennen des Anschlusses des Feldgeräts (26, 36) an den Kanal (56).

19. Verfahren nach den Ansprüchen 1 bis 18, wobei die Steuereinrichtung des Feldschalters (30, 32) mit jedem Kanal (56) der Vielzahl von Kanälen (56) und mit jeder Protokollerkennungsschaltung (102) der Gruppe von einer oder mehreren Protokollerkennungsschaltungen (102) verbunden ist.

20. Verfahren nach Anspruch 19, wobei Schritt c) umfasst, dass die Steuereinrichtung ein Ausgangssignal erzeugt, das dazu dient, einem Benutzer des Feldschalters (30, 32) das identifizierte Protokoll des Feldgeräts (26, 36) anzuzeigen.

## Revendications

1. Méthode réalisée par un contrôleur d'un commutateur de terrain pour la détection automatique de protocole d'un dispositif de terrain (26, 36) pour un réseau de contrôle de processus (10) en réponse au dispositif de terrain (26, 36) étant fixé à un port (62) du commutateur de terrain (30, 32) du réseau de contrôle de processus (10), le commutateur de terrain (30, 32) comprenant une pluralité de ports (62) et une pluralité de canaux (56), chaque port (62) étant connecté à un canal (56) respectif, chaque port (62) étant configuré pour connecter un dispositif de terrain (26, 36) au canal (56) connecté au port (62), chaque canal (56) étant configurable pour transmettre des données vers et depuis le port (62) connecté au canal (56), le commutateur de terrain (30, 32) comprenant un ensemble d'un ou plusieurs circuits de détection de protocole (102), chaque circuit de détection de protocole (102) de l'ensemble d'un ou plusieurs circuits de détection de protocole (102) étant compatible avec un protocole de dispositif de terrain respectif différent des protocoles de dispositif de terrain du reste de l'ensemble d'un ou plusieurs circuits de détection de protocole (102) et étant capable de transmettre des données vers et de recevoir des données depuis le port (62) connecté au canal (56) lorsqu'il est connecté au canal (56), l'ensemble d'un ou plusieurs circuits de détection de protocole (102) n'étant pas connecté directement à un canal (56) de la pluralité de canaux (56) au début de la méthode, la méthode comprenant les étapes suivantes :
a) en réponse à la fixation d'un dispositif de terrain (26, 36) à un port (62) de la pluralité de ports (62) du commutateur de terrain (30, 32), la connexion d'un premier circuit de détection de protocole (102) de l'ensemble d'un ou plusieurs circuits de détection de protocole (102) au canal (56) connecté au port (62) tout en maintenant les autres circuits de détection de protocole (102) déconnectés du canal (56) ;
b) la tentative de communication avec le dispositif de terrain (26, 36) fixé par l'intermédiaire du circuit de détection de protocole (102) connecté au canal (56) en utilisant le protocole du circuit de détection de protocole (102) connecté au canal (56) ;
c) lors de la détermination à l'étape b) que le dispositif de terrain (26, 36) fixé est compatible avec le protocole du premier circuit de détection de protocole (102), identifier le dispositif de terrain (26, 36) comme ayant un protocole associé au premier circuit de détection de protocole (102) puis la réalisation des étapes d) et e) :
d) la déconnexion du premier circuit de détection de protocole (102) du canal (56) ; et
e) la terminaison de la détection automatique de protocole ;
f) lors de la détermination à l'étape b) que le dispositif de terrain (26, 36) n'est pas compatible avec le protocole du premier circuit de détection de protocole (102), procéder avec les étapes suivantes :
g) la déconnexion du premier circuit de détection de protocole (102) du canal (56) ;
h) la détermination s'il existe des circuits de détection de protocole (102) restants dans l'ensemble d'un ou plusieurs circuits de détection de protocole (102) qui n'ont pas été connectés au canal (56) ;
i) lors de la détermination à l'étape h) qu'il n'existe pas de circuits de détection de protocole (102) restants qui n'ont pas été connectés au canal (56), la réalisation des étapes j) et k) :
j) l'identification du dispositif de terrain (26, 36) comme ayant un protocole non identifié ; et
k) la terminaison de la détection automatique de protocole ; et
l) lors de la détermination à l'étape h) qu'il existe un ou plusieurs circuits de détection de protocole (102) qui n'ont pas été connectés au canal (56), la répétition de la méthode en commençant à l'étape a) avec le circuit de détection de protocole (102) suivant de l'ensemble d'un ou plusieurs circuits de détection de protocole (102) qui n'a pas été connecté au canal (56) connecté au dispositif de terrain (26, 36) à la place du premier circuit de détection de protocole (102),
dans laquelle, à la fin de la méthode, tous les circuits de détection de protocole (102) de l'ensemble d'un ou plusieurs circuits de détection de protocole (102) sont déconnectés de la pluralité de canaux (56).

2. Méthode selon la revendication 1, dans laquelle l'étape b) comprend les étapes suivantes :
m) la transmission d'une commande au dispositif de terrain (26, 36) par l'intermédiaire du premier circuit de détection de protocole (102) ; et
n) la détermination si le dispositif de terrain (26, 36) a répondu à la commande ou n'a pas répondu à la commande.

3. Méthode selon la revendication 1, dans laquelle le canal (56) connecté au port (62) comprend une ligne d'alimentation connectée à une source d'alimentation par laquelle le dispositif de champ connecté (26, 36) peut recevoir de l'énergie par le biais de la ligne d'alimentation lorsqu'il est connecté au canal (56), et l'étape a) comprend les étapes suivantes :
m) en réponse à la fixation du dispositif de terrain (26, 36) au port (62), la détermination si le dispositif de terrain (26, 36) tire de l'énergie à travers la ligne d'alimentation avant la connexion du premier circuit de protocole au canal (56) ;
n) lors de la détermination à l'étape m) que le dispositif de terrain (26, 36) ne tire pas d'énergie à travers la ligne d'alimentation, lors de la réalisation de la méthode, la connexion au canal (56) uniquement des circuits de détection de protocole (102) de l'ensemble d'un ou plusieurs circuits de détection de protocole (102) qui sont associés à des protocoles de données uniquement ; et
o) lors de la détermination à l'étape m) que le dispositif de terrain (26, 36) tire de l'énergie à travers la ligne d'alimentation, lors de la réalisation de la méthode, la connexion au canal (56) uniquement des circuits de détection de protocole (102) de l'ensemble d'un ou plusieurs circuits de détection de protocole (102) qui sont associés à des protocoles de données et d'alimentation.

4. Méthode selon la revendication 1, dans laquelle le canal (56) connecté au port (62) comprend une ligne d'alimentation par laquelle le dispositif de champ connecté (26, 36) peut recevoir de l'énergie par l'intermédiaire de la ligne d'alimentation lorsqu'il est connecté au canal (56), et l'étape a) comprend les étapes suivantes :
m) en réponse à la fixation du dispositif de terrain (26, 36) au port (62), la détermination si le dispositif de terrain (26, 36) tire de l'énergie à travers la ligne d'alimentation avant la connexion du premier circuit de protocole au canal (56) ;
n) lors de la détermination à l'étape m) que le dispositif de terrain (26, 36) ne tire pas d'énergie, l'ouverture de la ligne d'alimentation pour empêcher l'énergie d'être transmise à travers le canal (56) vers le dispositif de terrain (26, 36) pendant que le dispositif de terrain (26, 36) est fixé au port (62).

5. Méthode selon la revendication 1, dans laquelle le canal (56) connecté au port (62) comprend une ligne d'alimentation par laquelle le dispositif de champ (26, 36) connecté peut recevoir de l'énergie par l'intermédiaire de la ligne d'alimentation lorsqu'il est connecté au canal (56), et l'étape a) comprend l'étape suivante :
m) en réponse à la fixation du dispositif de terrain (26, 36) au port (62), la limitation de l'énergie transmise par l'intermédiaire de la ligne d'alimentation à une puissance minimale de sécurité pour la protection du dispositif de terrain (26, 36) fixé tout en tentant de déterminer le protocole du dispositif de terrain (26, 36).

6. Méthode selon la revendication 5, dans laquelle l'étape e) comprend l'étape suivante :
o) avant la terminaison de la détection automatique de protocole, l'augmentation de l'énergie transmise au dispositif de terrain (26, 36) au maximum à la puissance maximale autorisée par le protocole identifié.

7. Méthode selon la revendication 1, dans laquelle les un ou plusieurs circuits de détection de protocole (102) peuvent être chacun sélectivement connectés et déconnectés avec chaque canal (56) de la pluralité de canaux (56), et chaque circuit de détection de protocole (102) comprend un premier relais, et l'étape a) comprend l'étape suivante :
m) la fermeture du premier relais du premier circuit de détection de protocole (102) dans le cadre de la connexion du premier circuit de détection de protocole (102) au canal (56) connecté au dispositif de terrain (26, 36) ; et
l'étape d) comprend l'étape suivante :
n) l'ouverture du premier relais du premier circuit de détection de protocole fermé à l'étape m) dans le cadre de la déconnexion du premier circuit de détection de protocole (102) fixé au canal (56) du canal (56).

8. Méthode selon la revendication 7, dans laquelle chaque canal (56) de la pluralité de canaux (56) est configuré pour transmettre des données à travers le canal (56) compatible avec un protocole de canal non associé à un circuit de détection de protocole (102) de l'ensemble d'un ou plusieurs circuits de détection de protocole (102) ;
chaque canal (56) de la pluralité de canaux (56) comprend une ligne de données étant configurée pour transmettre des données à travers le canal (56) en utilisant le protocole de canal ;
la ligne de données de chaque canal (56) de la pluralité de canaux (56) comprend un deuxième relais respectif dans la ligne de données ; et
l'étape a) comprend les étapes suivantes :
o) en réponse à la fixation d'un dispositif de terrain (26, 36) à un port (62) de la pluralité de ports (62) du commutateur de terrain (30, 32) mais avant la connexion de tout circuit de détection de protocole de l'ensemble d'un ou plusieurs circuits de détection de protocole au canal, la transmission de données en utilisant le protocole de canal à travers la ligne de données du canal (56) tout en maintenant le deuxième relais dans la ligne de données du canal (56) dans un état fermé et tous les premiers relais dans l'ensemble d'un ou plusieurs circuits de détection de protocole (102) dans un état ouvert pour déterminer si le dispositif de terrain (26, 36) est compatible avec le protocole de canal ; et
p) lors de la détermination à l'étape o) que le dispositif de terrain (26, 36) est compatible avec le protocole de canal, l'identification du dispositif de terrain (26, 36) comme ayant le protocole de canal et la terminaison de la méthode.

9. Méthode selon la revendication 8, dans laquelle l'étape e) comprend en outre, avant la terminaison de la détection automatique de protocole, les étapes suivantes :
r) la fixation d'un adaptateur de protocole (138) compatible avec le protocole identifié dans un connecteur d'adaptateur de protocole (72) disposé dans le canal (56), l'adaptateur de protocole (138) étant configuré pour traduire entre le protocole identifié et le protocole de canal.

10. Méthode selon la revendication 7, dans laquelle chaque circuit de détection de protocole (102) de l'ensemble d'un ou plusieurs circuits de détection de protocole (102) est connecté en parallèle à chaque canal (56) de la pluralité de canaux (56) par une ligne de données (104, 108, 112-1...) respective s'étendant du circuit de détection de protocole (102) au canal (56), chaque ligne de données (104, 108, 112-1...) comprenant un troisième relais (114) respectif dans la ligne de données (104, 108, 112-1...), et l'étape (a) comprend en outre l'étape suivante :
o) la fermeture du troisième relais dans la ligne de données (104, 108, 112-1...) s'étendant du premier circuit de détection de protocole (102) au canal (56) connecté au port (62) dans le cadre de la connexion du premier circuit de détection de protocole (102) au canal (56) ; et
les étapes e) et k) comprennent chacune l'étape suivante :
p) dans le cadre de la terminaison de la détection automatique de protocole, l'ouverture du troisième relais fermé à l'étape o) et ainsi la déconnexion du canal (56) de tous les circuits de détection de protocole (102) de l'ensemble de deux circuits de détection de protocole (102) ou plus.

11. Méthode selon la revendication 10, dans laquelle l'ensemble d'un ou plusieurs circuits de détection de protocole (102) comprend un ensemble de deux circuits de détection de protocole ou plus (102) et l'étape l) comprend l'étape suivante :
q) le maintien du troisième relais fermé à l'état fermé tout en répétant la méthode avec le circuit de détection de protocole (102) suivant.

12. Méthode selon la revendication 1, dans laquelle chaque canal (56) de la pluralité de canaux (56) est configuré pour transmettre des données compatibles avec un protocole de canal non associé à aucun protocole de l'ensemble d'un ou ou plusieurs circuits de détection de protocole (102) ; et
l'étape a) comprend les étapes suivantes :
m) avant la connexion du premier circuit de détection de protocole (102) au canal (56), lors du démarrage de la méthode, la détermination si le dispositif de terrain (26, 36) est compatible avec le protocole de canal ;
n) lors de la détermination à l'étape m) que le dispositif de terrain (26, 36) est compatible avec le protocole de canal, l'identification du dispositif de terrain (26, 36) comme ayant le protocole de canal et la terminaison de la méthode sans connecter aucun circuit de détection de protocole (102) de l'ensemble d'un ou plusieurs circuits de détection de protocole (102) au canal (56) ; et
o) lors de la détermination à l'étape n) que le dispositif de terrain (26, 36) n'est pas compatible avec le protocole de canal, la poursuite avec l'étape a) en connectant le premier circuit de détection de protocole (102) de l'ensemble d'un ou plusieurs circuits de détection de protocole (102) avec le canal (56).

13. Méthode selon la revendication 12, dans laquelle chaque canal (56) de la pluralité de canaux (56) comprend un connecteur d'adaptateur de protocole (72) respectif, le connecteur d'adaptateur de protocole (72) étant apte à accueillir un adaptateur de protocole (138) qui, lorsqu'il est fixé au connecteur d'adaptateur de protocole (72), convertit des données transmises par le biais du connecteur d'adaptateur de protocole (72) entre le protocole de canal et un protocole de dispositif de terrain différent du protocole de canal ; et
l'étape e) comprend l'étape suivante :
p) avant la terminaison de la détection automatique de protocole, la fixation d'un adaptateur de protocole (138) compatible avec le protocole de dispositif de terrain identifié au connecteur d'adaptateur de protocole (72) du canal (56) connecté au port (62).

14. Méthode selon la revendication 13, dans laquelle le connecteur d'adaptateur de protocole (72) de chaque canal (56) de la pluralité de canaux (56) ouvre normalement le canal (56) ; et l'étape a) comprend l'étape suivante :
q) avant la réalisation de l'étape m), la fourniture d'une continuité électrique à travers le connecteur d'adaptateur de protocole (72) du canal (56) connecté au dispositif de terrain (26, 36).

15. Méthode selon la revendication 13, dans laquelle :
l'étape q) comprend la fixation d'un connecteur traversant (82) au connecteur d'adaptateur de protocole (72) du canal (56) connecté au dispositif de terrain (26, 36), le connecteur traversant (82) fixé fournissant une continuité de canal à travers le connecteur d'adaptateur de protocole (72) ; et
l'étape p) comprend, avant la fixation de l'adaptateur de protocole (138) au connecteur d'adaptateur de protocole (72), le retrait du connecteur traversant (82) fixé au connecteur d'adaptateur de protocole (72) à l'étape q) du connecteur d'adaptateur de protocole (72).

16. Méthode selon la revendication 14 dans laquelle le commutateur de terrain (30, 32) comprend une pluralité de fentes (84), chaque fente (84) étant ouverte à un connecteur d'adaptateur de protocole (72) respectif de la pluralité de canaux (56) pour accueillir un adaptateur de protocole (138) dans la fente (84) ;
l'étape q) comprend la fixation d'un couvercle (86) au commutateur de terrain (30, 32) fermant la fente (84) ouverte au connecteur d'adaptateur de protocole (72) du canal (56) connecté au port (62), le couvercle (86) lorsqu'il est fixé au commutateur de terrain (30, 32) fournissant une continuité de canal à travers le connecteur d'adaptateur de protocole (72) ; et
l'étape p) comprend le retrait du couvercle (86) du dispositif de terrain (26, 36) pour ouvrir la fente (84) avant la fixation de l'adaptateur de protocole (138) au connecteur d'adaptateur de protocole (72).

17. Méthode selon la revendication 12, dans laquelle le protocole de canal de chaque canal (56) de la pluralité de canaux (56) est compatible avec la spécification Ethernet Advanced Physical Layer, APL.

18. Méthode selon la revendication 1, dans laquelle le commutateur de terrain (30, 32) peut transmettre de l'énergie à travers la pluralité de canaux (56) à des dispositifs de terrain (26, 36) connectés aux canaux (56) de la pluralité de canaux (56), et avant la réalisation de l'étape a), la méthode comprend les étapes suivantes :
m) la détection d'un début de transmission d'énergie à travers un canal (56) de la pluralité de canaux (56) pour détecter qu'un dispositif de champ (26, 36) a été connecté au canal (56) ; et
n) l'initiation de l'étape a) en réponse à la détection de la connexion du dispositif de terrain (26, 36) au canal (56).

19. Méthode selon les revendications 1 à 18, dans laquelle le dispositif de commande (90) de commutateur de terrain (30, 32) est connecté à chaque canal (56) de la pluralité de canaux (56) et à chaque circuit de détection de protocole (102) de l'ensemble d'un ou plusieurs circuits de détection de protocole (102).

20. Méthode selon la revendication 19, dans laquelle l'étape c) comprend le dispositif de commande (90) générant un signal de sortie utilisé pour identifier, pour un utilisateur du commutateur de champ (30, 32), le protocole identifié du dispositif de terrain (26, 36).
